# EUROPEAN PATENT APPLICATION

(11) **EP 3 650 453 A1**
(43) Date of publication of application: **13.05.2020**
(21) Application number: 18828309.7
(22) Date of filing: 03.07.2018
(51) Int. Cl.: C07F 9/00, C08G 63/08

(54) **MODIFIED POLYLACTIC ACID, POLYMERIZED MODIFIED POLYLACTIC ACID, AND METHOD AND APPARATUS FOR PRODUCING SAME**

(30) Priority: 04.07.2017 WO PCT/JP2017/024541
(71) Applicant: Optimizer Inc., Tokyo 107-0051 (JP)
(72) Inventor: TAKAMURA Takatsugu, Saitama-shi Saitama 331-0812 (JP)
(74) Representative: Vesterinen, Jussi Tapio
(86) International application number: PCT/JP2018/025199
(87) International publication number: WO 2019/009286

(57) **Abstract**

Provided are: a modified polylactic acid that is environmentally friendly, potentially usable as a battery material of a secondary battery or the like, and obtained by chemically derivatizing polylactic acid having an L-lactide structure generated or obtained in the manufacture of polylactic acid; a polymerized modified polylactic acid obtained by further polymerizing this modified polylactic acid; and methods and apparatuses for manufacturing the modified polylactic acid and the polymerized modified polylactic acid. The present invention uses: a modified polylactic acid including a structure represented by general formula (1) below (in formula (1), R1 and R2 are structures containing a metal element and can be the same or different, AA and BB are CC or structures containing a metal element in R3 and R4 and can be the same or different, and R5 is a structure containing a metal element); a polymerized modified polylactic acid; and methods and apparatuses for manufacturing the modified polylactic acid and the polymerized modified polylactic acid.

## Description

This application is based upon and claims the benefit of priority from PCT application No. PCT/JP2018/025199, filed on 03 July, 2018, the disclosure of which is incorporated herein in its entirety by reference.

### TECHNICAL FIELD

The present invention relates to a modified polylactic acid obtained by chemically derivatizing polylactic acid including a lactide structure obtained in the manufacture of polylactic acid as biodegradable plastic, a polymerized modified polylactic acid obtained by further polymerizing this modified polylactic acid, and methods and apparatuses for manufacturing the same.

### BACKGROUND ART

Biodegradable plastic is plastic that achieves superior functions like ordinary plastic when in use, is rapidly decomposed in a natural environment by microorganisms in soil or the like after being used, and finally becomes an organic component of soil, water, and carbon dioxide. Presently, biodegradable plastic is attracting attention in relation to the problem of waste, and various products have been presented so far. An example is polylactic acid obtained by performing dehydration polymerization on lactic acid obtained by fermenting starch such as corns or potatoes. This polylactic acid is used as an agricultural multi-film and a compost bag.

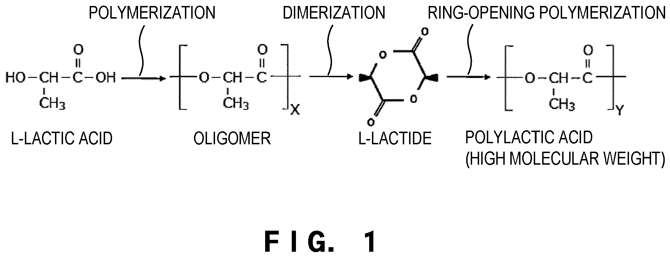

Polylactic acid is obtained by performing dehydration polycondensation on lactic acid (see, e.g., Fig. 1). It is conventionally known that lactic acid is obtained by lactic fermentation when making lactic acid bacteria act on vegetable starch. It is also known that polylactic acid is obtained by dehydration polycondensation of lactic acid when an appropriate amount of a catalyst prepared by mixing equal amounts of ruthenium oxide or the like and titanium oxide is added to concentrated lactic acid and the resultant material is heated under stirring. In this case, water generated in the dehydration polycondensation reaction must be discharged outside the system. As a method of discharging this water, a method of transpiring the water at low pressure is conventionally used (see, e.g., patent literature 1).

Furthermore, a method of obtaining polylactic acid is disclosed (see, e.g., patent literature 2 and Fig. 2). In this method, after polylactic acid manufacturing, particularly, after polymerization of synthesizing a lactic polymer in a polymerization tank, to which lactic acid is supplied, by performing dehydration polycondensation on lactic acid by heating, electrical dehydration is performed as follows. That is, in an electrical dehydration tank which includes a pair of electrodes, a partition, and a dehydration portion divided by the partition and in which the dehydration portion is formed on the cathode side of the electrodes, a direct electric current is supplied to the lactic polymer having undergone dehydration polycondensation in the polymerization, thereby moving water in the lactic polymer to the dehydration portion by electro-osmosis and obtaining polylactic acid.

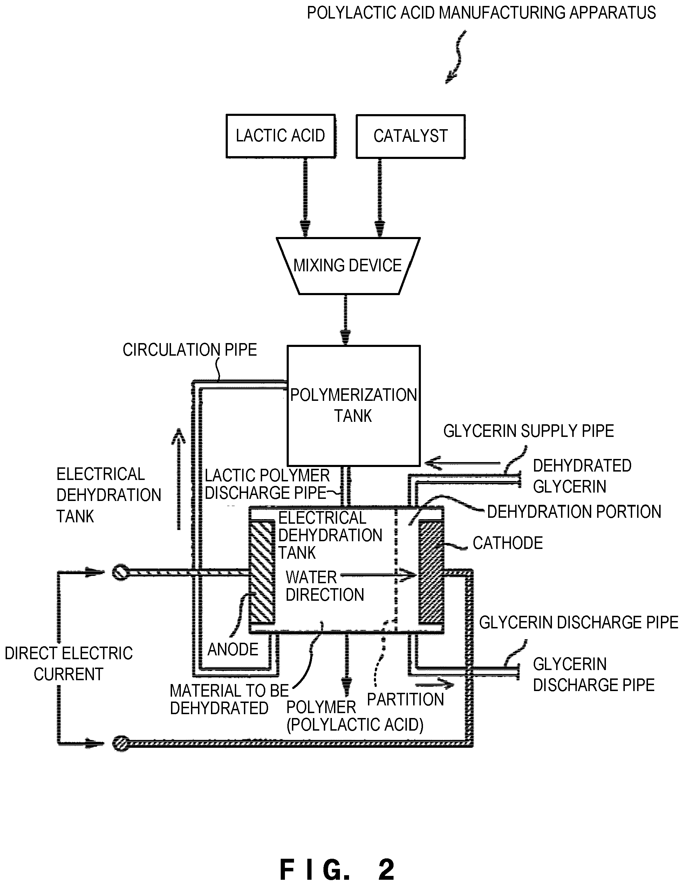

Fig. 2 is a schematic view conceptually showing the arrangement of a conventional polylactic acid manufacturing apparatus. This polylactic acid manufacturing apparatus includes a mixing device, a polymerization tank, and an electrical dehydration tank. The polylactic acid manufacturing apparatus can obtain desired polylactic acid by mixing lactic acid and a catalyst in the mixing device, performing dehydration polycondensation by heating the mixture in the polymerization tank, and further performing dehydration by electro-osmosis in the electrical dehydration tank. In the polylactic acid manufacturing apparatus of the present invention, the polymerization tank and the electrical dehydration tank are connected by a circulation pipe, and polylactic acid having a desired molecular weight can be obtained by repeating polymerization and drying a predetermined number of times or for a predetermined time.

Polylactic acid achieves superior functions like plastic, and is also expected to be able to solve problems such as the problem of waste. Therefore, the development of applications of polylactic acid has been advanced in various industries.

In particularly recent years, secondary batteries have notably been developed as consumer batteries for automobiles and power storage facilities, and it is expected to be able to solve the conventional various problems caused by the waste of batteries by using biodegradable plastic as members of the secondary batteries.

Unfortunately, the structure, the material, and the like of the secondary battery are problems in the manufacture, and particularly a material to be used as the basic material forming the secondary battery has been a big problem.

### CITATION LIST

### PATENT LITERATURE

Patent literature 1: Japanese Patent Laid-Open No. 2003-335850
Patent literature 2: Japanese Patent No. 3734821

### SUMMARY OF THE INVENTION

### TECHNICAL PROBLEM

The present invention has been made in consideration of the above problems, and provides a modified polylactic acid that is environmentally friendly, has potential as a battery material of a secondary battery or the like, and is obtained by chemically derivatizing polylactic acid having an L-lactide structure produced or obtained during the manufacture of polylactic acid, a polymerized modified polylactic acid obtained by further polymerizing this modified polylactic acid, and methods and apparatuses for manufacturing the same.

Note that "a modified polylactic acid" is a material obtained by preparing polylactic acid by using lactic acid as a source, and further chemically treating this polylactic acid. That is, polylactic acid in which a plurality of lactic acids are combined is the base of this material, and the material can be positioned as a lactide derivative because the material partially has the L-lactide structure. In this specification, the material will mainly be described as a modified polylactic acid.

To solve this problem, the present invention provides a polymerized modified polylactic acid manufacturing method capable of obtaining a polymerized modified polylactic acid which has a desired molecular weight and to which a metal is introduced, i.e., capable of obtaining a polymerized modified polylactic acid at a high efficiency within a short time, by first obtaining a modified polylactic acid by introducing a metal compound to an L-lactide structure as a cyclic structure produced in a process of manufacturing polylactic acid having a relatively low molecular weight, and then polymerizing the modified polylactic acid under predetermined conditions and provides an apparatus for manufacturing a polymerized modified polylactic acid having a sufficient molecular weight at a high efficiency within a short time.

### SOLUTION TO PROBLEM

The present inventor made extensive studies, and has found that a modified polylactic acid to which a metal such as vanadium is introduced can be formed by causing, in a polymerization reaction of lactic acid, a compound containing a metal such as vanadium, chromium, manganese, tin, iron, titanium, or nickel, e.g., ammonium vanadate or sulfate, to react with L-lactide coexisting with generated polylactic acid or an L-lactide structural portion as a part of polylactic acid. The present inventor has also found that a polymerized modified polylactic acid containing a metal as a constituent, which is useful as an application such as a battery material, can be synthesized by further polymerizing the modified polylactic acid to which the metal is introduced, thereby completing the present invention.

That is, the present invention is an invention according to a modified polylactic acid, a polymerized modified polylactic acid, and methods and apparatuses for manufacturing the same.

The present invention will be explained in detail below.

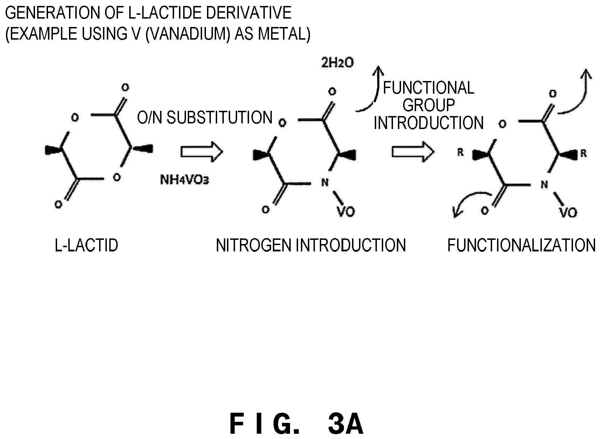

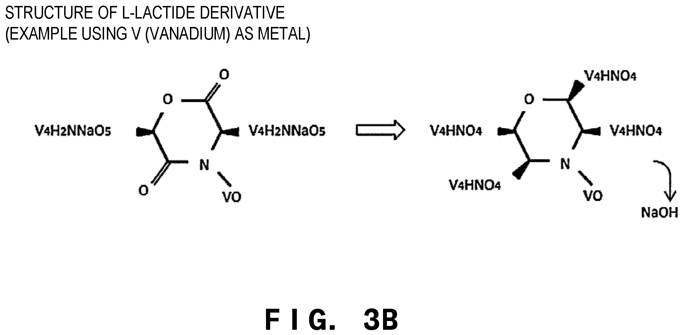

By using reaction paths shown in Figs. 3A and 3B, the present invention obtains a polymerized modified polylactic acid by substituting, with nitrogen, L-lactide structural portions existing by 5% to 40%, preferably 5% to 20%, more preferably 7% to 20%, and particularly preferably 7% to 10% (as weight or mass), performing derivatization by adding a functional group, and polymerizing ether bond (-O-) portions in an obtained modified polylactic acid. Note that "L-LACTIDE DERIVATIVE" described in Figs. 3A and 3B indicates a lactide structural portion of polylactic acid or a modified polylactic acid.

### <Modified Polylactic Acid and Composition Containing This>

The first invention of the present invention relates to a modified polylactic acid having an L-lactide structure or a composition containing it, and is as follows.

That is, the first invention is a modified polylactic acid including a structure represented by general formula (1) below: 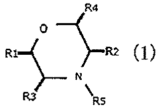 (in formula (1),
R1 and R2 are structures containing a metal element, preferably V (vanadium), chromium, manganese, tin, iron, titanium, or nickel, and more preferably vanadium, and can be the same or different, 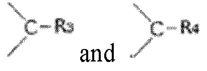
are 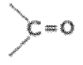 or structures containing a metal element, preferably V (vanadium), chromium, manganese, tin, iron, titanium, or nickel, and more preferably vanadium in R3 and R4, and can be the same or different, and
R5 is a structure containing a metal element, preferably V (vanadium), chromium, manganese, tin, iron, titanium, or nickel, and more preferably vanadium, and can be the same or different.)

Furthermore, the present invention is an invention for obtaining a modified polylactic acid including a structure represented by general formula (2) below: 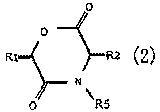 (in formula (2),
R1 and R2 are independently structures containing a metal element, preferably V (vanadium), chromium, manganese, tin, iron, titanium, or nickel, and more preferably vanadium, and can be the same or different, and
R5 is a structure containing a metal element, preferably V (vanadium), chromium, manganese, tin, iron, titanium, or nickel, and more preferably vanadium, and can be the same or different.)

In formula (2), the metal element is preferably an element selected from the group consisting of vanadium, nickel, iron, aluminum, titanium, cerium, silicon, zirconium, ruthenium, manganese, chromium, cobalt, platinum, thorium, palladium, and tin, more preferably V (vanadium), chromium, manganese, tin, iron, titanium, or nickel, and particularly preferably vanadium.

Also, the present invention is an invention for obtaining a modified polylactic acid including a structure represented by general formula (3) below: 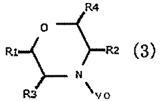 (in formula (3), R1, R2, R3, and R4 are the same as in formula (1) above.)

The present invention is an invention for obtaining a modified polylactic acid including a structure represented by general formula (4) below: 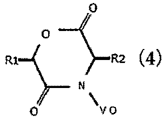 (in formula (4), R1 and R2 are the same as in formula (1) above.)

Furthermore, in the modified polylactic acid represented by at least one of formulas (1) to (4), the metal element is preferably an element selected from the group consisting of vanadium, nickel, iron, aluminum, titanium, cerium, silicon, zirconium, ruthenium, manganese, chromium, cobalt, platinum, thorium, palladium, and tin, more preferably V (vanadium), chromium, manganese, tin, iron, titanium, or nickel, and particularly preferably vanadium.

The present invention is an invention for obtaining a modified polylactic acid including a structure represented by general formula (5) below: 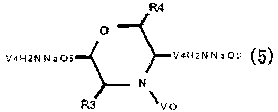 (in formula (5), R3 and R4 are the same as in formula (1) above.)

The present invention is an invention for obtaining a modified polylactic acid including a structure represented by general formula (6) below:

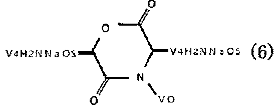

The present invention is a modified polylactic acid including a structure represented by general formula (7) below:

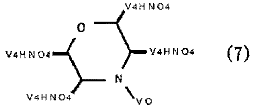

The present invention is also an invention for obtaining a modified polylactic acid by adding lactic acid and a metal oxide to a pressure vessel, mixing the materials, and heating the mixture under pressurization in the presence of an inert gas, thereby causing distillation.

The present invention is an invention for obtaining a modified polylactic acid by preparing polylactic acid including a lactide structure and having a weight average molecular weight of 2,000 to 20,000 daltons by decomposing polylactic acid by using an alkali catalyst, aminating the L-lactide structural portion by adding an aminated metal compound to polylactic acid including the L-lactide structure, and adding or introducing a functional group to the aminated L-lactide structural portion by further adding a compound having the functional group, thereby complexing the L-lactide structural portion.

The present invention is an invention according to a composition in which one of the abovementioned modified polylactic acids and polylactic acid coexist.

The abovementioned modified polylactic acid according to the present invention is a modified polylactic acid to which a metal element is introduced by aminating a lactide structure partially existing in polylactic acid, chemically derivatizing the lactide structure by adding or introducing a functional group, and polymerizing the resultant material. This modified polylactic acid is useful as an electronic material such as an electrode material of a battery.

### <Modified Polylactic Acid Manufacturing Method>

The second invention of the present invention relates to a modified polylactic acid manufacturing method. More specifically, the second invention is as follows.

That is, the second invention is an invention of a modified polylactic acid manufacturing method of adding polylactic acid including a lactide structure and having a weight average molecular weight of 2,000 to 20,000 daltons and a metal compound to a pressure vessel, mixing the materials, and heating the mixture under pressurization in the presence of an inert gas, thereby distilling a modified polylactic acid to which a metal element is introduced.

The present invention also relates to a modified polylactic acid manufacturing method of preparing polylactic acid including a lactide structure and having a weight average molecular weight of 2,000 to 20,000 daltons by decomposing polylactic acid by using an alkali catalyst, aminating the L-lactide structural portion by adding an aminated metal compound to polylactic acid including the L-lactide structure, and adding or introducing a functional group to the aminated L-lactide structural portion by further adding a compound having the functional group, thereby complexing the L-lactide structural portion. This is so because polylactic acid having this molecular weight includes a predetermined amount of an L-lactide structure (an intermediate structure in which two molecules of lactic acid are cyclized). The content of the L-lactide structure in polylactic acid is 5% to 40%, preferably 5% to 20%, more preferably 7% to 20%, and particularly preferably 7% to 10% (as a weight or a mass) in polylactic acid. This is so because if the content falls within this range, the reactions can efficiently be progressed in the manufacture of a modified polylactic acid.

Note that in the manufacture of a modified polylactic acid, a lactide structure included in polylactic acid obtained by polymerization of lactic acid can be used as the lactide structure as a reaction material. However, it is also possible to use polylactic acid including a lactide structure generated when self-made or commercially available polylactic acid is hydrolyzed by using methoxy (prepared by causing alkali such as sodium hydroxide to react with alcohol such as methanol).

Although this method is apparently redundant, it is generally difficult to efficiently manufacture a modified polylactic acid by using low-molecular-weight polylactic acid (PLA) including an L-lactide structure. This is so because in the manufacture of a modified polylactic acid, a modified polylactic acid synthetic reaction can be advanced by making the optical purity of polylactic acid including a lactide structure and the optical purity of polylactic acid (PLA) the same or substantially the same. Also, when using sufficiently polymerized polylactic acid (PLA), i.e., polymerized polylactic acid (PLA) exceeding a predetermined average molecular weight, alkali decomposition takes a long time, and maintaining the optical purity consumes labor.

The present inventor made extensive studies, and has found that a method of preparing polylactic acid (PLA) having a relatively low molecular weight and introducing nitrogen by partially alkali-decomposing this polylactic acid can rapidly and stably perform complexation with high reproducibility compared to other methods, i.e., can manufacture a polymerized modified polylactic acid.

When manufacturing polylactic acid (PLA) in an industrially large scale, it is rational to obtain lactic acid by lactic fermentation of starch as a starting material, condense the lactic acid, and obtain a modified polylactic acid by ring-opening polycondensation of a lactide structure. This method is also an environmentally friendly technique because the process starts from a biological material. On the other hand, when specifically manufacturing polylactic acid for a battery material by small-scale production, the use of self-made or commercially available lactic acid as a starting material is not a large burden in cost.

The present invention also relates to the above-mentioned modified polylactic acid manufacturing method using methoxy as an alkali catalyst, ammonium vanadate as a nitrogen source, and an apparatus that generates a microwave as a reaction environment, e.g., a microwave oven. In this method, PLA : methoxy : ammonium vanadate is preferably 50 to 150 : 0.5 to 1.5 : 10 to 30 (as a weight), and more preferably 80 to 120 : 0.8 to 1.2 : 15 to 25 (as a weight). In this case, if the addition amount of the nitrogen source to polylactic acid (PLA) as a material is large, even double-bonded oxygen is substituted, and this may destroy the structural skeleton of a lactide structure. Also, if the nitrogen source is insufficient, substitution may not sufficiently be performed. The present inventor made extensive studies, and has confirmed that when the addition amount of methoxy and the addition amount of ammonium vanadate as the nitrogen source with respect to polylactic acid (PLA) as a material fall within predetermined ranges, the reaction of substituting oxygen (O) of the lactide structure to nitrogen (N) progresses. Although this depends on a sample cooling method, the output and the irradiation area of the microwave as a heating source, and the like, the abovementioned ratio of PLA : methoxy : ammonium vanadate is good, and good results are obtained when PLA : methoxy : ammonium vanadate is about 100 : 1 : 20.

The process of complexing the aminated lactide structure by adding or introducing a functional group is preferably performed by adding ascorbic acid and/or glutamic acid as a compound having the functional group.

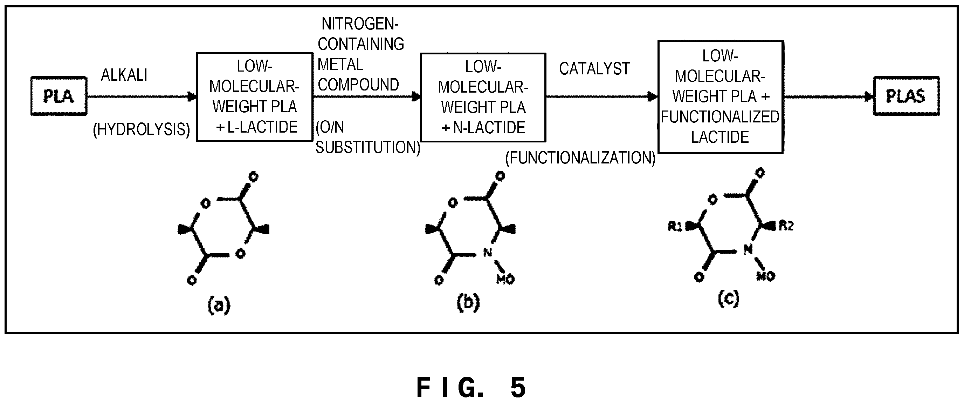

A lactide structural portion to which nitrogen is introduced (see, e.g., Fig. 3A, 3B, or (b) in Fig. 5) is a stable cyclic compound and hence is hardly polymerized in some cases. The following method can be used to polymerize this.

That is, the method is introduction of functional groups. For example, functional groups can be added relatively easily by making them react with ascorbic acid and glutamic acid. Therefore, when various monomers are added by using abovementioned ammonium vanadate as a catalyst (reagent), the ends of molecules bond to each other to form a relatively large cyclic compound. It is found that vanadium added as a catalyst is regularly oriented in the obtained compound. When the types of these additives (reagents) are changed, it is possible to add not only vanadium but also nickel, tin, iron, magnesium, chromium, manganese, titanium, and nickel. This makes it possible to manufacture modified polylactic acids to which various metals are introduced.

Figs. 3A and 3B show the structure (estimated) of a modified polylactic acid when using ammonium vanadate and sodium ascorbate. Four divalent vanadium molecules bond to one sodium ascorbate molecule, thereby generating one sodium hydroxide molecule (see Fig. 3B).

When the reaction conditions are changed by slightly raising the reaction temperature, the oxidation number of vanadium increases to trivalent. When a small amount of tin oxide is added during the reaction, a complex to which tetravalent vanadium is added or introduced is obtained. Complexes thus obtained three-dimensionally intersect each other at an angle of 60°, and the angle of intersection changes when an electric field is externally applied. Although this motion is similar to an electrostrictive effect, sufficient examination reveals that the valence in the complex changes. Accordingly, it is presumably possible to form a battery by adhering trivalent and tetravalent vanadium complexes (modified polylactic acids) and attaching electrodes to these complexes. This was found when increasing the electrostrictive potential as a bimorph structure in order to verify the electrostrictive effect.

The molecular weight of polylactic acid as a material is preferably 2,000 to 20,000, and more preferably 5,000 to 10,000. This is so because this increases the manufacturing yield or the yield of a modified polylactic acid to which a metal element is introduced.

Furthermore, the metal compound is preferably an oxide of an element selected from the group consisting of vanadium, nickel, iron, aluminum, titanium, cerium, silicon, zircon (zirconium), ruthenium, manganese, chromium, cobalt, platinum, thorium, palladium, and tin, more preferably an oxide of V (vanadium), chromium, manganese, tin, iron, titanium, or nickel, and particularly preferably an oxide of vanadium.

The present invention also relates to the abovementioned modified polylactic acid manufacturing method of obtaining a modified polylactic acid by adding refined lactic acid and a metal oxide that is 0.5 to 1 wt% of the refined lactic acid to a pressure vessel, injecting nitrogen gas into the pressure vessel by setting the injection pressure at atmospheric pressure to atmospheric pressure +50 mmHg, heating the materials at 170°C to 190°C for 3 to 5 hours, and crystallizing a modified polylactic acid including an L-lactide structure in the pressure vessel by decreasing the internal temperature of the pressure vessel.

The present invention relates to the abovementioned modified polylactic acid manufacturing method of generating a polymerized modified polylactic acid by heating a modified polylactic acid to the melting temperature, adding 0.1 to 1 wt% of an organic tin compound and 0.1 to 1 wt% of dodecyl alcohol to the abovementioned pressure vessel under stirring at 70 to 100 rpm (rotations/min), mixing the materials at about atmospheric pressure for 3 to 5 hours, reducing the pressure to the range of atmospheric pressure -20 to -50 mmHg while injecting an inert gas into the pressure vessel, and stirring the content (including L-lactide) in the pressure vessel under heating and emitting an electromagnetic wave.

The present invention relates to the abovementioned modified polylactic acid manufacturing method using methoxy as an alkali catalyst, ammonium vanadate as a nitrogen source, and an apparatus that generates a microwave as a reaction environment, e.g., a microwave oven.

Polylactic acid (PLA) is plant-derived biodegradable plastic, and is obtained by generating lactic acid by lactic fermentation of sugar such as starch, and polymerizing the lactic acid by dehydration polycondensation. Figs. 3A, 3B, and 5 are schematic views showing the formation process of an organic metal complex using polylactic acid (PLA) as a base skeleton. Aminated PLA (Fig. 3A and (b) in Fig. 5) is obtained by substituting one covalent-bonded oxygen of lactide (Fig. 3A and (a) in Fig. 5) as a dimer of lactic acid, and forms a structure as a model of cyclic peptide.

In the manipulation of substituting one oxygen with nitrogen, it is necessary to perform oxygen (O)/nitrogen (N) substitution while the structural skeleton of lactide is maintained. Therefore, care should be taken for materials to be used, a reaction material, and the reaction environment (e.g., the temperature, the pressure, and the time).

More specifically, it is possible to obtain a target modified polylactic acid and a polymerized modified polylactic acid obtained by polymerizing the target modified polylactic acid, by a method using methoxy as an alkali catalyst, ammonium vanadate as a nitrogen source, and an apparatus that generates a microwave as a reaction environment, e.g., a microwave oven.

In this method, in accordance with the degree of progress of the reaction of causing polylactic acid (including a lactide structure) as a starting material and a reagent to react with each other and finally obtaining a polymerized modified polylactic acid, the color of the reactant (sample) changes like transparent → yellow green → blue green → green blue. This makes it easy to determine the end point of the reaction. However, the method requires a technique of performing cooling so that the temperature of the reactant (sample) does not become a predetermined temperature or more in order to maintain the structural skeleton of lactide, and at the same time locally emitting a microwave, i.e., requires a temperature control/microwave emission control technique. Accordingly, the use of a microwave as a reaction energy source is a method for activating only oxygen and nitrogen having close electronegativities. This is so because it is assumed that oxygen in a dehydration-bonded portion is substituted with nitrogen by locally emitting a microwave while cooling (controlling the temperature of) the whole reactant (sample).

### <Modified Polylactic Acid Manufacturing Apparatus>

The third invention of the present invention relates to a modified polylactic acid manufacturing apparatus. More specifically, the third invention is as follows.

That is, the present invention is a modified polylactic acid manufacturing apparatus for use in the abovementioned modified polylactic acid manufacturing method, wherein
the apparatus is a sealable apparatus including a reaction tank, a stirring device, a temperature controller, and a condensing device,
the reaction tank includes an inlet that charges materials containing polylactic acid including a lactide structure and having a weight average molecular weight of 2,000 to 20,000 daltons, a metal compound, and a compound having a functional group, and an outlet that discharges a reaction product, and the reaction tank causes a reaction of the charged materials by heating and stirring the materials,
the stirring device includes a stirring blade via a stirring shaft in the reaction tank, and mixes the materials charged into the reaction vessel by rotating the stirring shaft at a predetermined speed by the stirring device,
the temperature controller is arranged around the reaction tank, includes a jacket that cools the reaction tank and an electric heater that heats a saccharification reaction tank in a lower portion, and controls a temperature of the reaction tank, and
the condensing device condenses a gas component generated when the materials are heated in the reaction tank.

The apparatus preferably further uses methoxy as an alkali catalyst, ammonium vanadate as a nitrogen source, and a device that generates a microwave as a reaction environment, e.g., a microwave oven.

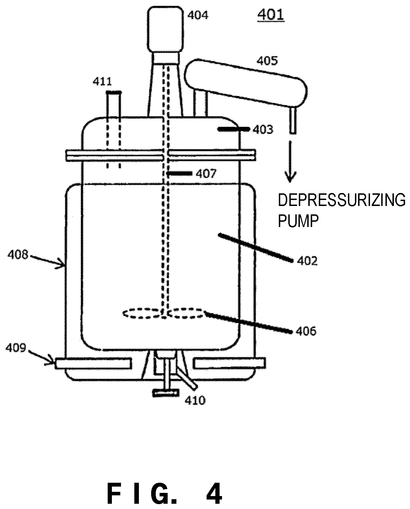

Fig. 4 is a schematic view of an example of an apparatus usable in the modified polylactic acid manufacturing method of the present invention.

Fig. 4 shows an example of a modified polylactic acid manufacturing apparatus (401) according to the present invention.

The modified polylactic acid manufacturing apparatus (401) includes a reaction vessel (402) that can be depressurized and pressurized, a lid (403), a stirring device (404), a heating medium jacket (408), a discharge valve (410), and a heat exchanger (405).

In the modified polylactic acid manufacturing apparatus (401), polylactic acid (modified polylactic acid) having a predetermined molecular weight (2,000 to 20,000 Da, preferably 5,000 to 10,000 Da) and including a lactide structure and an additive made of polyglycolic acid are charged into the reaction vessel (402) from a material inlet (411), and heated and mixed as they are stirred by the stirring device (404) including a stirring blade (406) and a stirring shaft (407), thereby causing a reaction. Then, a catalyst made of a nitrogen-containing metal compound is added, and a metal compound as another catalyst is further added. These processes are preferably performed at a reduced pressure of about 0.1 to 0.5 atm.

The heating temperature is managed by heating the reaction vessel (402) by supplying heat generated by an electric heater (409) via the heating medium jacket (408). The temperature can be controlled to a predetermined temperature as needed by using a temperature controller (not shown). The stirring device (404) including the stirring shaft (402) having the stirring blade (406) controls stirring. It is also possible to automatically control the temperature and stirring of the reaction vessel (402) by using a control system (not shown) such as a computer.

The shape and size of the stirring blade (406) are not limited to those of the abovementioned example embodiment, and can be any shape and size that allow efficient lactic acid generation/acquisition as an object of the present invention, and can achieve a sufficient stirring effect.

Also, the reaction vessel (402) is a closed system and can be pressurized and depressurized. The heat exchanger (405) can flocculate a part or the whole of gas components such as water vapor generated by heated stirring. In the apparatus shown in Fig. 4, the reaction vessel (402) can be depressurized by using a depressurizing pump, and pressurized by using a pressurizing pump (not shown).

Then, it is favorable to depressurize the reaction vessel (402), and heat the reaction vessel (402) as it is left to stand. This standing heating can terminate the reaction.

After the reaction is terminated in, e.g., Fig. 4, the content of the reaction vessel can be discharged by opening the reaction vessel (402) by opening the discharge valve (410), and performing pressurization from above the vessel by using a pressurizing pump.

### <Polymerized Modified Polylactic Acid and Method of Manufacturing the Same>

The fourth invention of the present invention relates to a polymerized modified polylactic acid, and the fifth invention relates to a polymerized modified polylactic acid manufacturing method.

As indicated by reaction formula (8) below, the polymerized modified polylactic acid manufacturing method of the present invention generates polylactic acid by dehydration condensation of lactic acid.

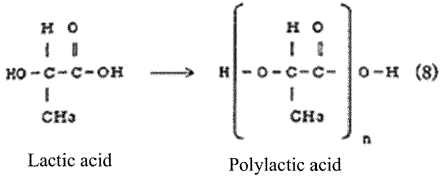

During the process of generating this polylactic acid, a lactide structure having a functional group is also included in a region having a relatively low molecular weight (the average molecular weight is about 2,000 to 20,000 daltons (Da)), as indicated by reaction formula (9) below:

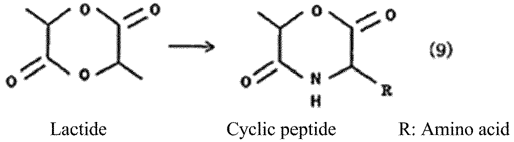

By copolymerizing amino acid having a functional group such as serine to this cyclic peptide, peptide (e.g., cyclic peptide) having a functional group is generated as indicated by formula (10) below:

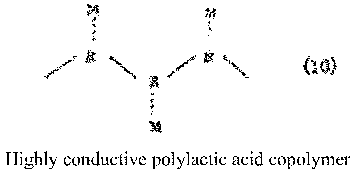

In formula (10), M indicates a metal atomic group, and R indicates amino acid. This cyclic peptide has a large number of side chains (R), and can easily form a highly conductive polymer (polymerized modified polylactic acid) by introducing the metal atomic group (M).

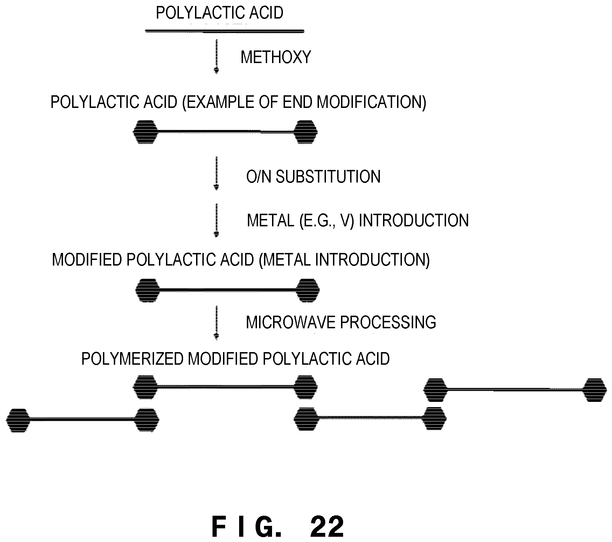

This will be explained with reference to Figs. 22 to 24.

Fig. 22 shows a model of polylactic acid including lactide structures, in which lactide structural portions exist at the two ends. The lactide structural portions are formed in polylactic acid by causing polylactic acid to react with methoxy, and a modified polylactic acid is obtained by introducing a metal such as V (vanadium) after O (oxygen)/N (nitrogen) substitution. A polymerized modified polylactic acid can be obtained by treating this modified polylactic acid by using a device for emitting a microwave or the like.

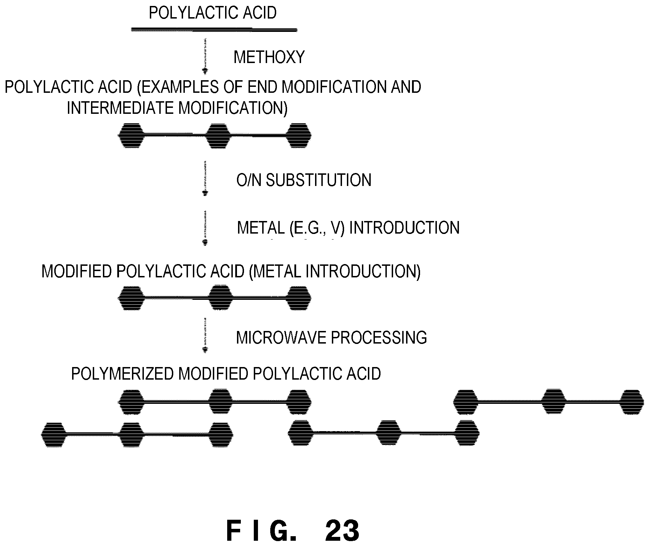

Fig. 23 shows a model of polylactic acid including lactide structures, in which lactide structural portions exist at the two ends and in an intermediate portion. The lactide structural portions are formed in polylactic acid by causing polylactic acid to react with methoxy, and a modified polylactic acid is obtained by introducing a metal such as V (vanadium) after O (oxygen)/N (nitrogen) substitution. A polymerized modified polylactic acid can be obtained by treating this modified polylactic acid by using a device for emitting a microwave or the like. In this polymerization, the lactide structural portion or another structure may be inserted and complexed.

In addition to the models shown in Figs. 22 and 23, polylactic acid including lactide structures may generate a modified polylactic acid including a larger number of lactide structural portions. These modified polylactic acids having various structures are also obtained by the same procedure as above. That is, lactide structural portions are formed in polylactic acid by causing polylactic acid to react with methoxy, a metal such as V (vanadium) is introduced after O (oxygen)/N (nitrogen) substitution, and a treatment is performed by using a device for emitting a microwave or the like. Also, the metal is not limited to V (vanadium), and the manufacture can be performed by using various metals such as chromium, manganese, tin, iron, titanium, and nickel.

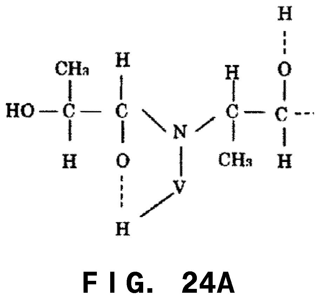

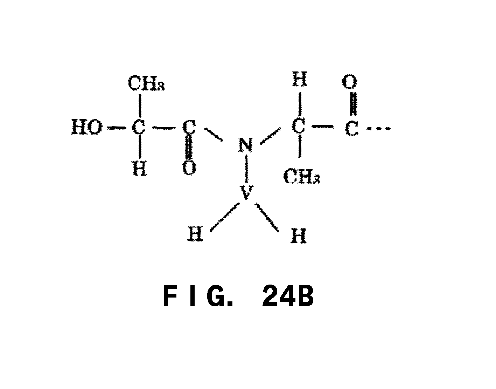

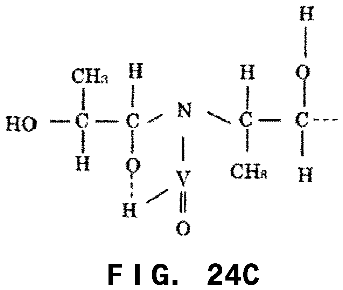

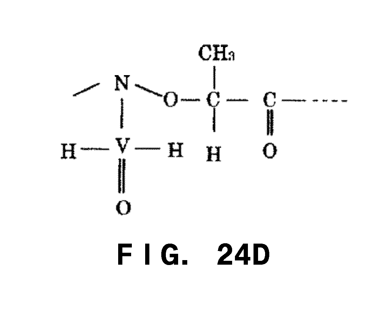

Figs. 24A to 24D are chemical structures (estimated) shown by taking, as an example, V (vanadium) as a metal to be introduced to a lactide structural portion of a modified polylactic acid. Figs. 24A, 24B, 24C, and 24D are respectively examples in which vanadium is divalent (II), trivalent (III), tetravalent (IV), and pentavalent (V).

When using a modified polylactic acid or a polymerized modified polylactic acid of the present invention as a battery material, particularly, an electrode, it is possible to preferably use vanadium, chromium, manganese, and tin as a positive electrode, and vanadium, iron, titanium, and nickel as a negative electrode. As these electrode materials, combinations of vanadium/vanadium, chromium/iron, nickel/tin, and manganese/titanium are examples of the positive electrode/the negative electrode. As the valence of a metal, each individual metal species has a unique valence and generates an electromotive force, so it is only necessary to appropriately set the valence of each metal.

The present invention is a method of manufacturing a polymerized L-modified polylactic acid as a highly conductive polymer obtained by using polylactic acid (PLA) having a relatively low molecular weight as a material, copolymerizing amino acid to this polylactic acid, and introducing metal atomic groups to the side chains, and also provides an apparatus for manufacturing this polymerized modified polylactic acid.

A polymerized modified polylactic acid to be manufactured by the present invention is highly conductive plastic, and can be used as an electromagnetic wave shield material and a material of, e.g., various conductive parts, batteries, and capacitors. When actually using the polymerized modified polylactic acid in these applications, it is possible to use a composition obtained by adding an anti-oxidizer, a plasticizer, and the like to a polymerized modified polylactic acid to be manufactured.

As described above, the present invention is a method of manufacturing a polymerized modified polylactic acid as a high-conductivity polymer by using polylactic acid (PLA) having a relatively low molecular weight as a material, copolymerizing amino acid to this polylactic acid, and introducing metal atomic groups to the side chains. More specifically, the present invention is as follows.

That is, the present invention relates to a polymerized modified polylactic acid manufacturing method including
performing generation of adding polylactic acid, a nitrogen-containing metal compound, and, if necessary, a metal oxide, to a pressure vessel, mixing these materials, and heating the mixture under pressurization in the presence of an inert gas, thereby distilling a modified polylactic acid including a lactide structure, and
performing polymerization of adding a catalyst such as an organic tin compound and an additive such as dodecyl alcohol to the modified polylactic acid, mixing the materials, stirring the mixture under heating at a reduced pressure while filling an inert gas, thereby polymerizing the modified polylactic acid and obtaining a polymer.

The present invention relates to a polymerized modified polylactic acid manufacturing method further including, following the abovementioned processes, performing impurity transpiration of heating the polymer obtained in the performing polymerization and transpiring an unreacted substance contained in the polymer.

The present invention also relates to a polymerized modified polylactic acid manufacturing method of obtaining polylactic acid including a lactide structure by decomposing polylactic acid as a material having a weight average molecular weight of 2,000 to 20,000 daltons (Da) by an alkali catalyst, aminating the L-lactide by adding a nitrogen-containing metal compound and another metal compound to polylactic acid including the lactide structure, and polymerizing the aminated lactide structural portion by adding or introducing a functional group by further adding an additive.

The molecular weight of polylactic acid is not simply a high molecular weight, and is preferably determined in accordance with an application. For example, when obtaining a resin material for a secondary battery, a modified polylactic acid including mixed lactide structures is changed into a metal complex, and a resin is manufactured by polymerizing the lactide. In this case, the molecular weight of polylactic acid is preferably on the order of a few tens of thousands Da (daltons), particularly, 2,000 to 20,000 daltons (Da), as an average molecular weight.

The present invention relates to a polymerized modified polylactic acid manufacturing method including performing modified polylactic acid generation in which 0.5 to 1 wt% of an oxide of one type or two or more types of elements (metals) selected from the group consisting of vanadium, nickel, iron, aluminum, titanium, cerium, silicon, zirconium, ruthenium, manganese, chromium, cobalt, platinum, thorium, palladium, and tin, more preferably the group consisting of vanadium, chromium, manganese, tin, iron, titanium, and nickel, and particularly vanadium, is mixed in lactic acid, preferably refined lactic acid, in a pressure vessel filled with an inert gas, and the mixture is heated at 170°C to 190°C for 3 to 5 hours, thereby distilling a modified polylactic acid including a lactide structure. In this method, the inert gas is nitrogen gas, the injection pressure is the atmospheric pressure to +50 mmHg, and the modified polylactic acid including a lactide structure is obtained by crystallizing the content by cooling.

The present invention relates to a polymerized modified polylactic acid manufacturing method including performing polymerization of heating a modified polylactic acid to the melting temperature, adding 0.1 to 1 wt% of an organic tin compound and 0.1 to 1 wt% of dodecyl alcohol under stirring at 70 to 100 rpm (rotations/min), mixing the materials at atmospheric pressure for 3 to 5 hours, reducing the pressure to -20 to -50 mmHg while injecting an inert gas, and stirring the content under heating at 160°C to 170°C, thereby generating a polymerized modified polylactic acid. This method uses an apparatus including a mechanism for accelerating polymerization by emitting an electromagnetic wave.

The present invention relates to a polymerized modified polylactic acid manufacturing method including mixing 0.5 to 1 wt% of an oxide of one type or two or more types of metal oxides selected from the group consisting of vanadium, nickel, iron, aluminum, titanium, cerium, silicon, zirconium, ruthenium, manganese, chromium, cobalt, platinum, thorium, palladium, and tin, more preferably the group consisting of vanadium, chromium, manganese, tin, iron, titanium, and nickel, and particularly vanadium, in lactic acid generated by removing impurities, and stirring the mixture at 70 to 100 rpm (rotations/min) for 1 to 2 hours, thereby sufficiently mixing the metal oxide in the content. After that, the content is heated to 170°C to 190°C and kept stirred for 3 to 5 hours. Then, the operation of the stirring device is stopped, and the content is slowly cooled and solidified, thereby crystallizing a modified polylactic acid by distillation.

The present invention relates to a polymerized modified polylactic acid manufacturing method, wherein in performing polymerized modified polylactic acid refining of removing an unreacted substance contained in a polymerized modified polylactic acid obtained by polymerizing a modified polylactic acid, the internal pressure of a vessel is reduced to -50 to -100 mmHg, and the content is heated to 180°C to 190°C and stirred at 70 to 100 rpm (rotations/min) for 1 to 2 hours, thereby transpiring an unreacted substance such as low-molecular-weight polylactic acid.

The present invention relates to a polymerized modified polylactic acid manufacturing method using methoxy as an alkali catalyst, ammonium vanadate as a nitrogen source, and a microwave oven as a reaction environment. In this method, PLA (polylactic acid) : methoxy : ammonium vanadate = 100 : 1 : 20 (as a weight) is favorable.

In the present invention, the aminated L-lactide structural portion is preferably complexed and polymerized by adding or introducing a functional group by adding ascorbic acid and/or glutamic acid.

In the present invention, the metal oxide is preferably an oxide of an element selected from the group consisting of vanadium, nickel, iron, aluminum, titanium, cerium, silicon, zirconium, ruthenium, manganese, chromium, cobalt, platinum, thorium, palladium, and tin.

The present invention relates to the abovementioned manufacturing method, wherein in the performing modified polylactic acid generation, refined lactic acid and a metal oxide that is 0.5 to 1 wt% of the refined lactic acid are added to a pressure vessel, nitrogen gas is injected into the pressure vessel by setting the injection pressure at atmospheric pressure to atmospheric pressure +50 mmHg, the materials are heated at 170°C to 190°C for 3 to 5 hours, and the internal temperature of the pressure vessel is decreased, thereby crystallizing a modified polylactic acid in the pressure vessel and obtaining a modified polylactic acid.

The present invention relates to the abovementioned polymerized modified polylactic acid manufacturing method, wherein a modified polylactic acid is heated to the melting temperature, 0.1 to 1 wt% of an organic tin compound and 0.1 to 1 wt% of dodecyl alcohol are added to the pressure vessel under stirring at 70 to 100 rpm (rotations/min), the materials are mixed at about atmospheric pressure for 3 to 5 hours, the pressure is reduced to the range of atmospheric pressure -20 to -50 mmHg while injecting an inert gas into the pressure vessel, and a polymerized modified polylactic acid is generated by heating and stirring the content of the pressure vessel and emitting an electromagnetic wave.

The present invention relates to the abovementioned polymerized modified polylactic acid manufacturing method, wherein in the performing impurity transpiration, the internal pressure of the pressure vessel is reduced the range of atmospheric pressure -20 to -50 mmHg, and the content of the pressure vessel is heated to 180°C to 190°C and stirred at 70 to 100 rpm for 1 to 2 hours, thereby transpiring an unreacted substance contained in the content.

The present invention relates to a polymerized modified polylactic acid manufacturing method including obtaining polylactic acid including a lactide structure by decomposing polylactic acid having a weight average molecular weight of 2,000 to 20,000 daltons (Da) by using an alkali catalyst, aminating the L-lactide structure by adding a nitrogen-containing metal compound to polylactic acid including the lactide structure, and introducing a functional group to the aminated modified polylactic acid by adding a compound having the functional group, thereby polymerizing the modified polylactic acid to which the functional group is introduced.

In the present invention, it is favorable to use methoxy as an alkali catalyst, ammonium vanadate as a nitrogen source, and a device that generates a microwave as a reaction environment, e.g., a microwave oven.

### <Polymerized Modified Polylactic Acid>

The fourth invention of the present invention relates to a polymerized modified polylactic acid. More specifically, the fourth invention is as follows.

The present invention relates to a polymerized modified polylactic acid manufactured by processes including
performing generation of adding polylactic acid, a nitrogen-containing metal compound, and, if necessary, a metal oxide, to a pressure vessel, mixing the materials, and heating the mixture under pressurization in the presence of an inert gas, thereby distilling a modified polylactic acid including an L-lactide structure, and
performing polymerization of adding a catalyst such as an organic tin compound and an additive such as dodecyl alcohol to the modified polylactic acid, mixing the materials, and stirring the mixture under heating at a reduced pressure while filling an inert gas, thereby polymerizing the modified polylactic acid and obtaining a polymer.

The present invention relates to the abovementioned polymerized modified polylactic acid containing, as a metal, one or a plurality of elements of an element selected from the group consisting of vanadium, nickel, iron, aluminum, titanium, cerium, silicon, zircon (zirconium), ruthenium, manganese, chromium, cobalt, platinum, thorium, palladium, and tin, more preferably an element selected from the group consisting of vanadium, chromium, manganese, tin, iron, titanium, and nickel, and particularly vanadium, wherein the weight average molecular weight is 65,000 Da (daltons).

The present invention relates to a polymerized modified polylactic acid having formula (11) below as a constituent unit. 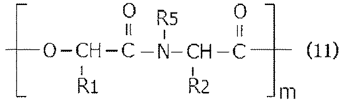 (in formula (11), R1 and R2 are structures containing, as a metal element, one or a plurality of elements of an element selected from the group consisting of vanadium, nickel, iron, aluminum, titanium, cerium, silicon, zircon (zirconium), ruthenium, manganese, chromium, cobalt, platinum, thorium, palladium, and tin, more preferably an element selected from the group consisting of vanadium, chromium, manganese, tin, iron, titanium, and nickel, and particularly vanadium, and can be the same or different, R5 is a structure containing a metal element, preferably V (vanadium), and m indicates the number of continuous or discontinuous repetitions.)

Formula (11) above is a polymerized L-lactide derivative obtained by polymerizing a modified polylactic acid indicated by formula (2) presented earlier.

The present invention relates to a polymerized modified polylactic acid having formula (12) below as a constituent unit: 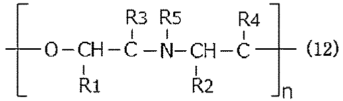 (in formula (12), R1, R2, R3, and R4 are structures containing, as a metal element, one or a plurality of elements of an element selected from the group consisting of vanadium, nickel, iron, aluminum, titanium, cerium, silicon, zircon (zirconium), ruthenium, manganese, chromium, cobalt, platinum, thorium, palladium, and tin, more preferably an element selected from the group consisting of vanadium, chromium, manganese, tin, iron, titanium, and nickel, and particularly vanadium, and can be the same or different, R5 is a structure containing a metal element, preferably V (vanadium), and n indicates the number of continuous or discontinuous repetitions.)

Formula (12) above is a polymerized L-lactide derivative obtained by polymerizing a modified polylactic acid indicated by formula (1) presented earlier.

The polymerized modified polylactic acids indicated by formulas (11) and (12) above can each independently exist, but it is estimated that they are mixed because the modified polylactic acids indicated by formulas (1) and (2) as their precursors are normally mixed.

### <Polymerized Modified Polylactic Acid (PLAS) Manufacturing Method>

The fifth invention of the present invention relates to a polymerized modified polylactic acid manufacturing method. More specifically, the fifth invention is as described in an invention according to a manufacturing apparatus to be described below.

### <Polymerized Modified Polylactic Acid (PLAS) Manufacturing Apparatus>

The sixth invention of the present invention relates to a polymerized modified polylactic acid (PLAS) manufacturing apparatus. More specifically, the sixth invention is as follows.

That is, the sixth invention is a polymerized modified polylactic acid manufacturing apparatus for use in the abovementioned modified polylactic acid manufacturing method, wherein
the apparatus is a sealable apparatus comprising a reaction tank, a stirring device, a temperature controller, an electromagnetic wave emitting device, and a condensing device,
the reaction tank includes an inlet that charges materials containing polylactic acid including an L-lactide structure and having a weight average molecular weight of 2,000 to 20,000 daltons, a metal compound, and a compound having a functional group, and an outlet that discharges a reaction product, and causes a reaction of the charged materials by heating and stirring the materials,
the stirring device includes a stirring blade via a stirring shaft in the reaction tank, and mixes the materials charged into the reaction vessel by rotating the stirring shaft at a predetermined speed by the stirring device,
the temperature controller is arranged around the reaction tank, includes a jacket that cools the reaction tank and an electric heater that heats a saccharification reaction tank in a lower portion, and controls a temperature of the reaction tank,
the electromagnetic wave emitting device has a mechanism that generates an electromagnetic wave, and the electromagnetic wave emitting device accelerates polymerization by emitting an electromagnetic wave to the content stored in the reaction tank, and
the condensing device condenses a gas component generated when the materials are heated in the reaction tank.

Furthermore, the present invention is the abovementioned polymerized modified polylactic acid manufacturing apparatus that uses methoxy as an alkali catalyst and ammonium vanadate as a nitrogen source, and generates a microwave as a reaction environment from the electromagnetic wave emitting device.

Fig. 5 below shows a manufacturing sequence of a polymerized modified polylactic acid.

Referring to Fig. 5, when a hydrolysis reaction occurs due to the addition of sodium hydroxide, methoxy, or the like, polylactic acid ("PLA" in Fig. 5) generates low-molecular-weight polylactic acid ("LOW-MOLECULAR-WEIGHT PLA" in Fig. 5), and a lactide structure ((a) in Fig. 5) as a dimer of lactic acid.

When a nitrogen-containing metal compound such as ammonium vanadate and, if necessary, a metal oxide such as vanadium oxide are added to cause a reaction, a substitution reaction ("O/N SUBSTITUTION" in Fig. 3) occurs between oxygen ("O" of "-O-" in Fig. 5) and nitrogen ("N" of "-N-" in Fig. 3), and this generates "N-lactide" (estimated as the structure of (b) in Fig. 5) by derivatizing the lactide structure.

Note that in Fig. 5, an oxide of a metal element M bonds to a nitrogen atom as indicated by "-MO", and this is an example in which a metal can be introduced during O/N substitution (oxygen/nitrogen substitution).

By further adding a compound having a functional group such as serine to cause a reaction, the reaction generates a modified polylactic acid (estimated as the structure of (c) in Fig. 5) having an L-lactide structural portion to which the functional group is added or introduced.

In (c) of Fig. 5, a hydrogen atom H in (b) of Fig. 5 is substituted, as indicated by R1 and R2. An example is serine (C₃H₇NO₃, a chemical formula is as indicated by formula (13) below.)

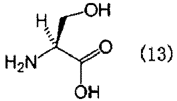

In addition, a polymerized modified polylactic acid can be obtained by polymerizing modified polylactic acid (c) after that.

The method of efficiently polymerizing a modified polylactic acid to a polymerized modified polylactic acid is not particularly limited. As will be described later, however, a method of emitting an electromagnetic wave, particularly a microwave is favorable.

In the polymerized modified polylactic acid manufacturing method of the present invention as described above, a relatively low-molecular-weight polylactic acid having a weight average molecular weight of 2,000 to 20,000 daltons (Da), preferably 5,000 to 10,000 (Da) as the molecular weight of polylactic acid as a material is hydrolyzed by alkali once, and a series of reactions, i.e., O/N substitution and functionalization are performed in the copresence of L-lactide generated by the hydrolysis as a dimer of lactic acid and polylactic acid, thereby obtaining a polymerized modified polylactic acid via a relatively low-molecular-weight modified polylactic acid. A weight average molecular weight of 2,000 to 20,000 daltons (Da) is favorable as the molecular weight of polylactic acid as a material because this increases the manufacturing yield or the yield of a modified polylactic acid and a polymerized modified polylactic acid.

Even when O/N substitution and functionalization are performed without hydrolyzing polylactic acid by adding alkali unlike the series of reactions described above, it is difficult to efficiently obtain a polylactic acid derivative including a lactide structure. Although this reaction mechanism is not necessarily clear, it is estimated that the hydrolysis of polylactic acid appropriately generates polylactic acid including a lactide structure, and factors such as the optical purity make it possible to efficiently obtain a modified polylactic acid. In at least the present invention, therefore, a state in which polylactic acid including a lactide structure is appropriately generated, i.e., a composition containing at least polylactic acid including a lactide structure and polylactic acid is necessary.

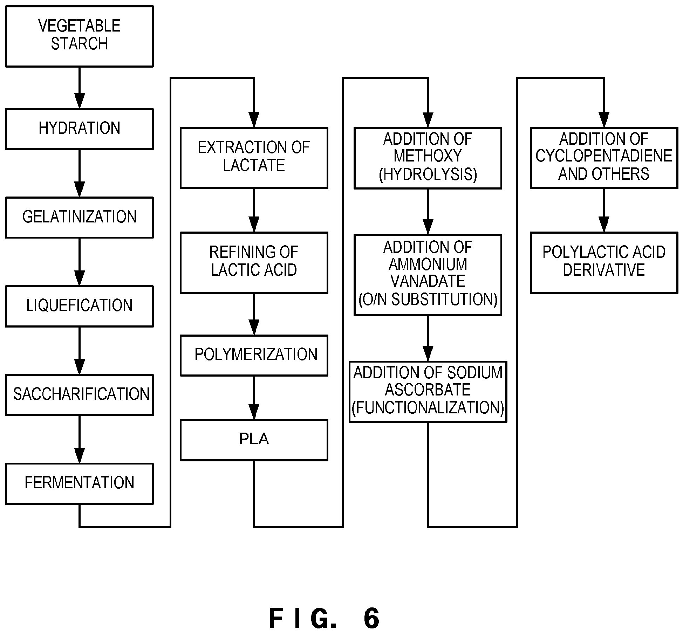

Fig. 6 below shows the manufacturing sequence of a polymerized modified polylactic acid. Each process will be explained below in accordance with the sequence. Note that "POLYLACTIC ACID DERIVATIVE" shown in Fig. 6 indicates a polymerized modified polylactic acid.

First, plant-derived sugar (e.g., starch) is hydrated by being mixed with water (hydration), and the hydrated sugar is gelatinized by heating (gelatinization). In addition, lactic acid is added by an amount of, e.g., 0.1 to 1.0 wt%, and the resultant material is liquefied by steaming at 110°C to 130°C (liquefication). The liquefied starch is saccharified into monosaccharide by making a saccharifying enzyme such as amylase act on the liquefied starch (saccharification). Salt, manganese sulfate, ammonium phosphate, powdered skim milk, soymilk, molasses, a surfactant, and the like are mixed in the saccharified liquid sugar, and fermentation is performed by making plant lactobacillus such as lactobacillus plantarm act on the mixture (fermentation), thereby obtaining lactic acid.

After the fermentation, the generated lactic acid is extracted as lactate by a well-known appropriate prescription (lactate extraction), and refined (lactic acid refining). The refined lactic acid is polycondensed by heating (polymerization), thereby generating polylactic acid (PLA).

The refined polylactic acid (PLA) is hydrolyzed by adding alkali such as methoxy (hydrolysis). In this process, polylactic acid including an L-lactide structure as a dimer structure of lactic acid is generated. When polylactic acid is hydrolyzed, therefore, polylactic acid including an L-lactide structure is appropriately generated.

Alkali is not limited to methoxy but may also be, e.g., sodium hydroxide or potassium hydroxide, and it is possible to use any alkali that reacts with and hydrolyzes polylactic acid and generates an L-lactide structure having a dimer structure, i.e., that is suitable for the object of the present invention.

As the conditions such as the amount of alkali to be added, it is possible to properly select, e.g., an amount, a reaction temperature, and a reaction time suitable for the object of the present invention.

In the state in which polylactic acid including an L-lactide structure is appropriately generated, a nitrogen-containing metal compound such as ammonium vanadate and, if necessary, a metal oxide such as vanadium oxide are added to cause a reaction. Consequently, "O/N substitution" as a substitution reaction between some oxygen in the L-lactide structure (a) and nitrogen occurs, and N-lactide (an L-lactide structure to which a nitrogen element is introduced) is generated by derivatization of the L-lactide structure.

As the nitrogen-containing metal compound, it is possible to use a compound, e.g., ammonium vanadate, or an oxide, which contains nitrogen in a molecule, of one type or two or more types of elements (metals) of an element selected from the group consisting of vanadium, nickel, iron, aluminum, titanium, cerium, silicon, zirconium, ruthenium, manganese, chromium, cobalt, platinum, thorium, palladium, and tin, more preferably an element selected from the group consisting of vanadium, chromium, manganese, tin, iron, titanium, and nickel, and particularly vanadium. Of these compounds, a vanadium-containing compound is preferably used.

Also, as the metal compound to be added as needed, it is possible to use an oxide of one type or two or more types of elements (metals) of an element selected from the group consisting of vanadium, nickel, iron, aluminum, titanium, cerium, silicon, zirconium, ruthenium, manganese, chromium, cobalt, platinum, thorium, palladium, and tin, more preferably an element selected from the group consisting of vanadium, chromium, manganese, tin, iron, titanium, and nickel, and particularly vanadium. Of these oxides, an oxide of vanadium is preferably used.

As the conditions such as the amounts of the nitrogen-containing metal compound and the metal oxide to be added, it is possible to properly select, e.g., an amount, a reaction temperature, and a reaction time suitable for the object of the present invention.

It is favorable to add an amino-group-containing compound such as amino acid, e.g., serine and a compound containing a function group. Furthermore, a reaction is caused in the presence of a compound that accelerates introduction of a functional group such as ascorbic acid (C₆H₈O₆, a chemical structure is indicated by formula (14) below) as needed. Consequently, a modified polylactic acid having a lactide structural portion to which a functional group is added or introduced is generated.

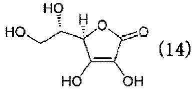

A method of further efficiently opening the ring of this modified polylactic acid and polymerizing the modified polylactic acid to a polymerized L-lactide derivative is not particularly limited. As will be described later, however, a polymerized modified polylactic acid can be obtained by performing ring-opening polymerization by using a method of emitting an electromagnetic wave, particularly a microwave.

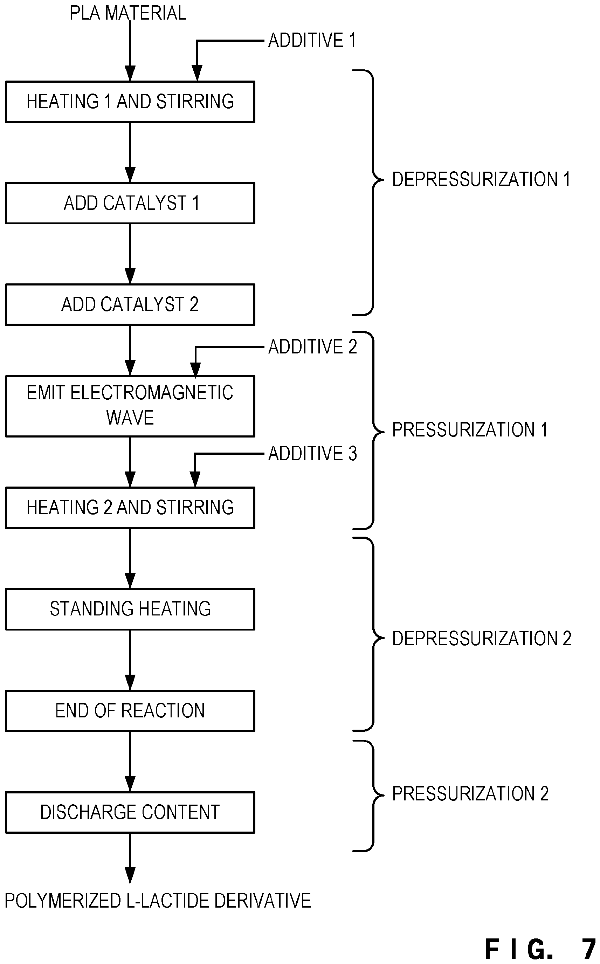

Fig. 7 is a sequence showing manufacturing processes of obtaining a polymerized modified polylactic acid.

Fig. 7 shows the sequence of manufacturing processes of a polymerized modified polylactic acid, and each process will be explained below in accordance with the sequence. Note that "POLYMERIZED L-LACTIDE DERIVATIVE" described in Fig. 7 indicates a polymerized modified polylactic acid.

First, polylactic acid having a predetermined molecular weight is supplied as a material to a reaction vessel. In Fig. 7, "PLA MATERIAL" is this polylactic acid. The molecular weight of this PLA material is preferably 2,000 to 20,000 daltons (Da), and more preferably 5,000 to 10,000 daltons (Da), as a weight average molecular weight. This is so because when using polylactic acid having an average molecular weight falling within this range, it is possible to control the performance of a finally obtained polymerized L-lactide derivative, or satisfy the object of the present invention.

Then, additives are added to the reaction vessel, as indicated by ADDITIVE 1 in Fig. 7. The additives used herein are polyglycolic acid ((C₂H₂O₂)ₙ, n is an integer of 2 or more) and lactide (C₆H₈O₄, preferably an L body).

The addition amount of polyglycolic acid is preferably 5 to 10 parts by weight with respect to 100 parts by weight of the PLA material. The addition amount of lactide is preferably 10 to 20 parts by weight with respect to 100 parts by weight of the PLA material.

Lactide generated during the PLA material manufacturing process can directly be used, and it is also possible to obtain lactide by hydrolyzing the PLA material by alkali such as sodium hydroxide or methoxy. Especially when a modified polylactic acid including a lactide structure obtained by hydrolyzing the PLA material by an alkali material such as sodium hydroxide or methoxy and polylactic acid as the residual PLA material coexist, it is possible to efficiently obtain a polymerized modified polylactic acid by polymerizing a modified polylactic acid in a later process. This is favorable because the yield can be increased.

After the PLA material and additive 1 are charged in the reaction vessel as described above, the vessel is preferably heated and stirred so as to sufficiently mix the PLA material and additive 1.

Subsequently, a catalyst (CATALYST 1 in Fig. 7) is added while heating and stirring the PLA material and additive 1. Catalyst 1 is preferably a nitrogen-containing metal compound.

As this nitrogen-containing metal compound, it is possible to use a compound or an oxide containing nitrogen in a molecule, of one type or two or more types of elements selected from the group consisting of vanadium, nickel, iron, aluminum, titanium, cerium, silicon, zirconium, ruthenium, manganese, chromium, cobalt, platinum, thorium, palladium, and tin, and more preferably the group consisting of vanadium, chromium, manganese, tin, iron, titanium, and nickel. Of these compounds, vanadium is favorable as a metal, and ammonium vanadate is preferably used. The addition amount is preferably 0.1 to 10 parts by weight with respect to 100 parts by weight of the PLA (polylactic acid) material.

It is also possible to further add a catalyst (CATALYST 2 in Fig. 7). Catalyst 2 is preferably a metal compound. The addition amount is preferably 0.1 to 10 parts by weight with respect to 100 parts by weight of the PLA (polylactic acid) material.

As the metal oxide to be added as needed, it is possible to use an oxide of one type or two or more types of elements (metals) selected from the group consisting of vanadium, nickel, iron, aluminum, titanium, cerium, silicon, zirconium, ruthenium, manganese, chromium, cobalt, platinum, thorium, palladium, and tin, and more preferably the group consisting of vanadium, chromium, manganese, tin, iron, titanium, and nickel. Of these oxides, vanadium is favorable as a metal, and vanadium oxide is preferably used.

After the PLA (polylactic acid) material and additive 1 are charged in the vessel, processes until the addition of catalyst 2 are preferably performed at a reduced pressure, e.g., 0.1 to 0.5 atm. As will be described later, however, a post-process is preferably performed under pressurization in some cases. Therefore, the vessel to be used is preferably a sealable vessel that can be depressurized and pressurized.

After the process of adding catalyst 2 is performed as described above, an additive is added to the reaction vessel as indicated by ADDITIVE 2 in Fig. 7. This additive used herein is a nitrogen-containing compound, typically amino acid such as serine (C₃H₇NO₃).

The addition amount of the nitrogen-containing compound is preferably 5 to 10 parts by weight with respect to 100 parts by weight of the PLA (polylactic acid) material.

After ADDITIVE 2 is charged in the reaction vessel as described above, an electromagnetic wave is preferably emitted. This is so because emitting an electromagnetic wave to the content improves the efficiency of synthesis of a finally obtained polymerized modified polylactic acid, and increases the yield.

As the condition for emitting an electromagnetic wave, the use of a device capable of emitting a microwave is favorable. When using a microwave, the wavelength is not particularly limited as long as a modified polylactic acid as an object of the present invention can be polymerized. An example is the use of a 2.45-GHz electromagnetic wave that is legally suitable when the present invention is applied. The intensity and the emission time of an electromagnetic wave to be used can properly be selected from the range suitable for the object of the present invention.

Then, as indicated by ADDITIVE 3 in Fig. 7, additives are added to the reaction vessel while the content of the reaction vessel is heated and stirred. The additives used herein are hydrocarbon-based alcohol such as dodecyl alcohol, preferably alkyl alcohol, and metal alkylate such as cerium acetate.

The addition amount of hydrocarbon-based alcohol is preferably 0.1 to 1 part by weight with respect to 100 parts by weight of the PLA material. The addition amount of metal alkylate is preferably 0.1 to 1 part by weight with respect to 100 parts by weight of the PLA material.

After ADDITIVE 3 is charged in the reaction vessel, heating and stirring are preferably performed.

After the nitrogen-containing compound is added and an electromagnetic wave is emitted as described above, processes until ADDITIVE 3 in Fig. 7 is added and heating and stirring are performed are preferably performed under pressurization, e.g., at a pressure of 1 (exclusive) to 5 (inclusive) atm.

After that, the reaction vessel is preferably left to stand and heated at a reduced pressure, e.g., 0.1 to 0.5 atm. Thus, the reaction can be terminated.

After the reaction is terminated, the content is discharged from the reaction vessel. In this process, a polymerized modified polylactic acid can be obtained by pushing out the content from the reaction vessel under pressurization, e.g., at 2 to 3 atm.

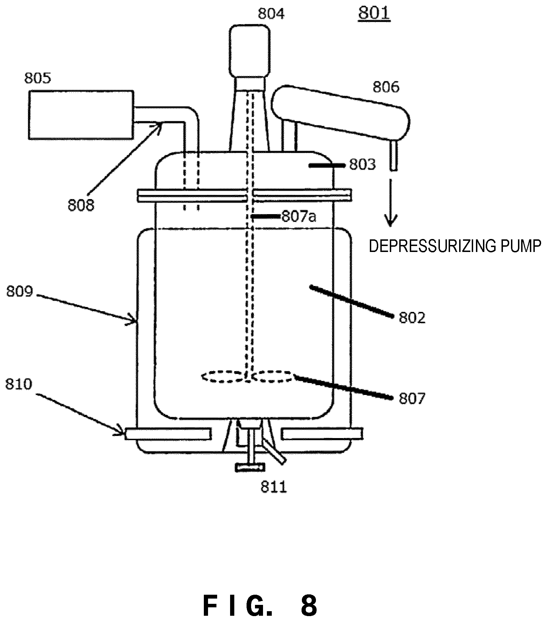

Fig. 8 is a schematic view of an example of an apparatus usable in the polymerized modified polylactic acid manufacturing method of the present invention.

Fig. 8 shows an example of a polymerized modified polylactic acid manufacturing apparatus (801, to be referred to as a "modified polylactic acid manufacturing apparatus" hereinafter) according to the present invention.

The modified polylactic acid manufacturing apparatus (801) includes a reaction vessel (802), a lid (803), a stirring device (804), an electromagnetic wave generator (805), a heating medium jacket (809), a discharge valve (811), and a heat exchanger (806).

In the modified polylactic acid manufacturing apparatus (801), polylactic acid having a predetermined molecular weight (2,000 to 20,000 Da, preferably 5,000 to 10,000 Da) and an additive made of polyglycolic acid are charged into the reaction vessel (802) from a material inlet (not shown), and heated and mixed as they are stirred by the stirring device (804) including a stirring blade (807) and a stirring shaft (807a). Then, a catalyst made of a nitrogen-containing metal compound is added, and a metal compound as another catalyst is further added. These processes are preferably performed at a reduced pressure of about 0.1 to 0.5 atm.

The heating temperature is managed by heating the reaction vessel (802) by supplying heat generated by an electric heater (810) via the heating medium jacket (809). The temperature can be controlled to a predetermined temperature as needed by using a temperature controller (not shown). The stirring device (804) including the stirring shaft (807a) having the stirring blade (807) controls stirring. It is also possible to automatically control the temperature and stirring of the reaction vessel (802) by using a control system (not shown) such as a computer.

The shape and size of the stirring blade (807) are not limited to those of the abovementioned example embodiment, and can be any shape and size that allow efficient lactic acid generation/acquisition as an object of the present invention, and can achieve a sufficient stirring effect.

Also, the reaction vessel (802) is a closed system and can be pressurized and depressurized. The heat exchanger (806) can flocculate a part or the whole of gas components such as water vapor generated by heated stirring. In the apparatus shown in Fig. 8, the reaction vessel (802) can be depressurized by using a depressurizing pump, and pressurized by using a pressurizing pump (not shown).

After the material, the additive, and the catalysts are heated and mixed, it is preferable to add a nitrogen-containing compound such as serine as an additive to the reaction vessel (802) and emit an electromagnetic wave to the content by the electromagnetic wave generator (805), while the reaction vessel (802) is pressurized. This process is preferably performed via a nitrogen flow waveguide (808). This is so because electromagnetic wave emission is preferably performed in the presence of an inert gas such as nitrogen gas.

It is possible to properly select the wavelength, the wavelength range, the intensity, the emission time, the type of emission (continuous emission or discontinuous emission), and the like of an electromagnetic wave to be emitted in accordance with the state of the content.

After the electromagnetic wave is emitted, hydrocarbon-based alcohol such as dodecyl alcohol and metal alkylate such as cerium acetate are added as additives to the reaction vessel (802), and heated and stirred.

Then, it is favorable to depressurize the reaction vessel (802), and heat the reaction vessel (802) as it is left to stand. This standing heating process can terminate the reaction.

After the reaction is terminated, the content of the reaction vessel can be discharged in, e.g., Fig. 8 by opening the reaction vessel (802) by opening the discharge valve (811), and performing pressurization from above the vessel by using a pressurizing pump.

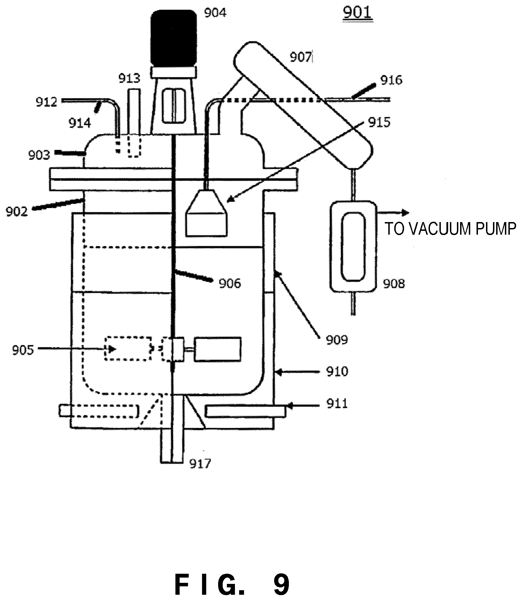

Fig. 9 shows an example of the structure of a polymerizing apparatus according to the present invention.

Fig. 9 shows the structure of a polymerizing apparatus (901) of the present invention, and is a sectional view of the apparatus in the vertical direction. In this sectional view, a portion on the left side of the central line shows the outer surfaces of a reaction vessel (902) and a lid (903), and the dotted lines indicate the internal structure of the reaction vessel.

As shown in Fig. 9, the polymerizing apparatus (901) of the present invention includes the reaction vessel (902), the lid (903), a stirring device (904), jackets (909, 910), an electric heater (911), a water-cooled condenser (907), and a condensate reservoir (908). In this polymerizing apparatus (901), a material is charged into the reaction vessel (902) from a material inlet (913), a catalyst and an additive are charged from a catalyst/additive inlet (912) through a pipe (914), and the charged materials are mixed.

After the mixing, a polymerization accelerating mechanism is used to perform polymerization by causing a reaction at a predetermined temperature. That is, a power supply (not shown) supplies power through a power line (916), and an electromagnetic wave emitting device (915) emits a predetermined electromagnetic wave, thereby polymerizing a modified polylactic acid in the content (mixture), and obtaining a polymer having a predetermined molecular weight. The obtained polymer is discharged from a discharge port (917).

The temperature of the content of the reaction vessel (902) is managed as follows. When heating the reaction vessel (902), the electric heater (911) transfers heat to the oil jacket (910). When adjusting the reaction temperature, a cooler (not shown) cools the reaction vessel (902) via the water-cooled jacket (909), thereby controlling the temperature to a predetermined temperature. The stirring device (904) including a stirring blade (905) and a stirring shaft (906) controls stirring. It is also possible to automatically control the temperature and stirring of the reaction vessel (902) by using a control system (not shown) such as a computer.

Also, the reaction vessel (902) is a closed system closed by the lid (903), and can be pressurized and depressurized. Water vapor and the like generated by heated stirring can be condensed by the water-cooled condenser (907), and reserved in the condensate reservoir (908). The condensate reservoir (908) can also be depressurized by being connected to a vacuum pump or the like.

The shape and size of the stirring blade (905) are not limited to those of the abovementioned example embodiment, and can be any shape and size that allow efficient lactic acid generation/acquisition as an object of the present invention, and can achieve a sufficient stirring effect.

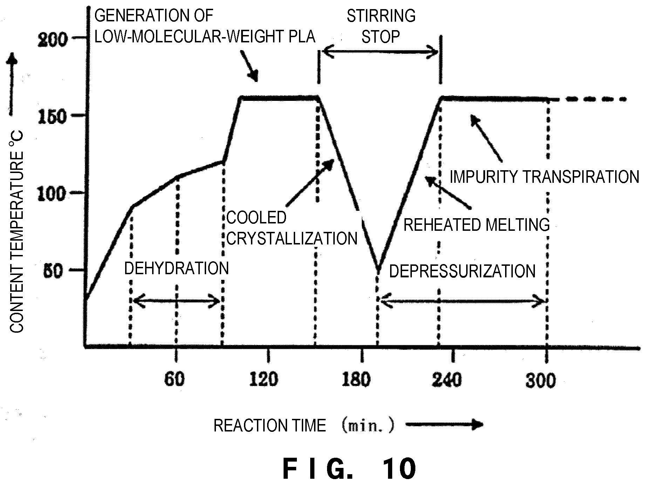

Fig. 10 is an example of a control diagram of a process of refining a polymerized modified polylactic acid of the present invention. After water is transpired at 120°C to 130°C from crude lactic acid extracted by an electrodialyser, the lactic acid is further heated and stirred at 150°C to 160°C for 1 to 2 hours, thereby generating low-molecular-weight PLA (polylactic acid). After organic acids other than lactic acid are separated by crystallizing the obtained PLA by slow cooling, the resultant material is heated again in a reduced-pressure environment at -20 to -50 mmHg, thereby removing impurities by transpiration. If the internal pressure of the vessel is decreased too much or the temperature of the content is higher than 160°C, the transpiration amount of not only impurities but also lactic acid increases, so the yield of refined lactic acid decreases.

Fig. 10 shows a control diagram of the lactic acid refining process. The abscissa (X-axis) is the reaction time (min), and the ordinate (Y-axis) is the internal temperature (°C) of the reaction vessel. A case in which this control diagram is used in the polymerizing apparatus shown in Fig. 9 will be explained in time series.

First, after water is transpired at 120°C to 130°C from crude lactic acid extracted by a refining process performed by an electrodialyser or the like ("DEHYDRATION" in Fig. 10), the lactic acid is further heated and stirred at 150°C to 160°C for 1 to 2 hours, thereby generating low-molecular-weight PLA (polylactic acid).

Then, organic acids other than lactic acid are separated by crystallizing the PLA by slow cooling ("COOLED CRYSTALLIZATION" in Fig. 10). In this process, the crystallization is accelerated by stopping the stirring device ("STIRRING STOP" in Fig. 10).

After that, the resultant material is reheated ("REHEATED MELTING" in Fig. 10) in a reduced-pressure environment at, e.g., -20 to -50 mmHg with respect to the atmospheric pressure ("DEPRESSURIZATION" in Fig. 10), thereby removing impurities by transpiration ("IMPURITY TRANSPIRATION" in Fig. 10).

In the series of operations described above, if the internal pressure of the reaction vessel is decreased too much or the temperature of the content of the reaction vessel is made higher than 160°C, the amount of transpiration of not only impurities but also lactic acid increases, and this sometimes decreases the yield of refined lactic acid.

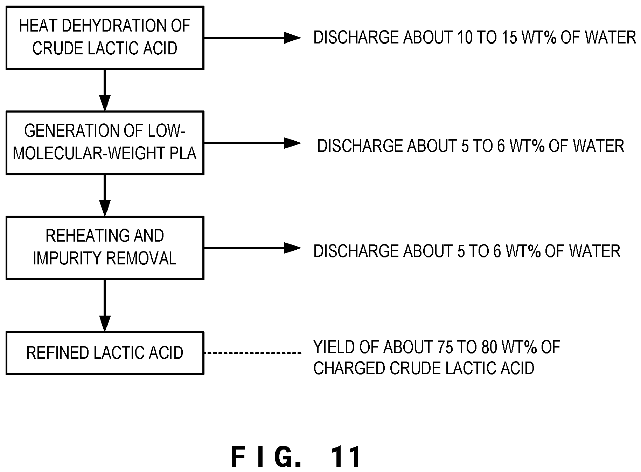

After the series of operations described above, the degree of generation of lactic acid is as shown in Fig. 11 to be explained below.

As shown in Fig. 11, about 10 to 15 wt% of water can be discharged by dehydrating crude lactic acid by heating, about 5 to 6 wt% of water can be discharged by heating low-molecular-weight polylactic acid ("LOW-MOLECULAR-WEIGHT PLA" in Fig. 11) generated by heated dehydration of crude lactic acid, and about 5 to 6 wt% of water can be discharged by dehydrating the resultant material by reheating it, so the yield of refined lactic acid is about 75 to 80 wt%.

Polymerization of generating a polymerized modified polylactic acid is as follows. A modified polylactic acid including a lactide structure is heated to the melting temperature, and 0.1 to 1 wt% of an organic tin compound (e.g., tin ethylhexanoate) and 0.1 to 1 wt% of dodecyl alcohol are added to the modified polylactic acid under stirring at 70 to 100 rpm (rotations/min). After the materials are mixed at atmospheric pressure for 3 to 5 hours, the pressure is reduced to -20 to -50 mmHg while an inert gas is injected, and the content is heated to 160°C to 170°C and kept stirred for 3 to 4 hours. After that, the stirring speed is reduced to 20 to 30 rpm (rotations/min), and heating is further continued for 20 to 30 hours while an electromagnetic wave (e.g., 2.45 GHz) is emitted, thereby obtaining a polymerized modified polylactic acid.

It is conventionally known that a reaction is accelerated when using an electromagnetic wave in the synthesis of a polymer. For example, a laboratory testing apparatus that conducts a test by injecting a small amount of sample in a glass vessel or the like installed in an electromagnetic-wave oven has been announced, but the frequency, the output, and the like are not optimized with respect to the amount of content. The present inventor made extensive studies, and has found that when polymerizing a modified polylactic acid in order to obtain a polymerized modified polylactic acid, an optimum electromagnetic-wave frequency is 2.45 GHz, and an optimum output is 10 to 30 W (watts) per 1 kg of the content.

Fig. 12 is a control diagram from generation of a lactide structure to acquisition of a polymerized modified polylactic acid by polymerization.

Fig. 13 is a schematic view showing the positional relationship of attachment of a polymerization accelerating mechanism (electromagnetic wave emitting device) according to the present invention.

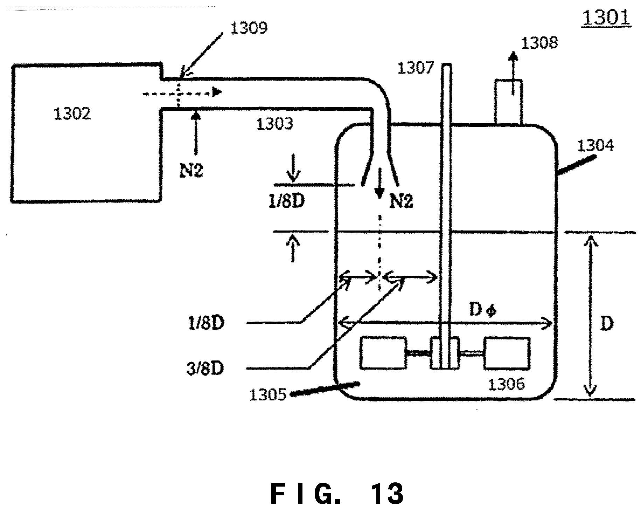

As the positional relationship of attachment of a polymerization accelerating mechanism (electromagnetic wave emitting device) (1301) of the present invention, Fig. 13 shows the layout of a polymerization vessel (1304) including a stirring device (not shown) including a stirring blade (1306) and a stirring shaft (1307), and a magnetron oscillator (1302). A low-pressure exhaust port (1308) is formed in the upper portion of the polymerization vessel (1304).

A waveguide (1303) extends from the side of a mica window (1309) of the magnetron oscillator (1302), and enters the polymerization vessel (1304) from its upper portion so that nitrogen (N₂) can be introduced into the polymerization vessel (1304).

The entrance position of the waveguide (1303) is not particularly limited as long as the polymerization accelerating mechanism (electromagnetic wave emitting device) of the present invention can efficiently polymerize an L-lactide derivative. However, the distal end port (electromagnetic wave introduction port) of the waveguide (1303) from the electromagnetic wave emitting device shown in Fig. 13 is preferably attached to, e.g., a position spaced apart by 3/8D (D = diameter) from the center viewed from above the polymerization vessel. When the distal end portion is attached to this position, the emission amount of an electromagnetic wave evenly distributes on the entire surface of the content. Also, as described in Fig. 11, as the volume of the content of the polymerization vessel (1304), the amount of the content is preferably adjusted so that the height is equal or almost equal to the diameter D of the polymerization vessel (1304). Furthermore, the distal end port (electromagnetic wave introduction port) of the waveguide (1303) is preferably attached to a position spaced apart by 1/8D (D = diameter) from the position of the upper end of the content (1305) of the polymerization vessel (1304).

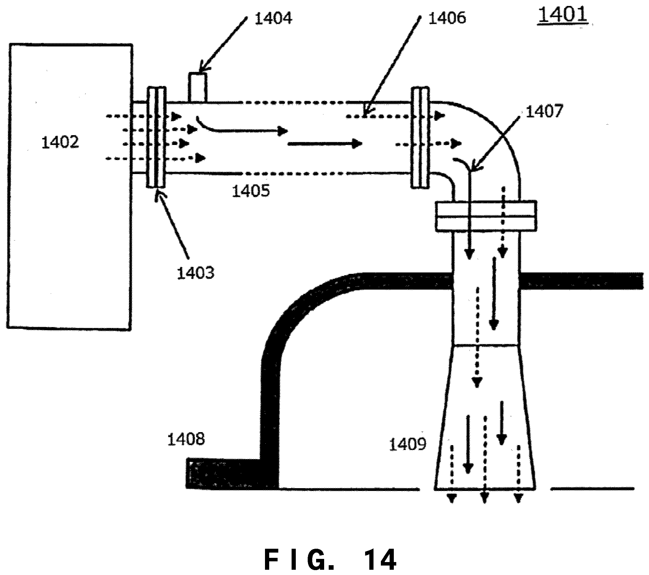

When the distal end port is attached as described above, an electromagnetic wave radiated from a horn antenna shown in Fig. 14 (to be described later) is directly emitted to the surface of the content, and a reflected wave reflected inside the polymerization vessel is also emitted. On the other hand, since the content moves while being stirred by the stirring device, the content can receive uniform electromagnetic wave emission when the electromagnetic wave emitting device is attached to the abovementioned position.

Note that the stirring blade (1306) is installed via the stirring shaft (1307) in the polymerization vessel (1304), and the shape and size of the stirring blade (1306) are not limited to those of the abovementioned example embodiment, and can be any shape and size that accelerate efficient polymerization of a modified polylactic acid as an object of the present invention, and can achieve a sufficient stirring effect.

Fig. 14 is a schematic view showing an example of the structure of the polymerization accelerating mechanism (electromagnetic wave emitting device) according to the present invention.

Fig. 14 shows the structure of a polymerization accelerating mechanism (electromagnetic wave emitting device) (1401) of the present invention, and is an enlarged view of Fig. 13. The polymerization accelerating mechanism (electromagnetic wave emitting device) (1401) includes a magnetron oscillator (1402), and a waveguide (1405) connected to the magnetron oscillator (1402) via a mica plate (1403). The waveguide (1405) extends to a horn antenna (1409) through a polymerization vessel upper lid (1408).

A nitrogen gas inlet (1404) for introducing nitrogen gas (1407) is formed midway along the waveguide (1405). The nitrogen gas (1407) is introduced to the polymerization vessel (shown in Fig. 13) together with an electromagnetic wave (1406) oscillated from the magnetron oscillator (1402). Referring to Fig. 14, the broken-line arrows indicate the electromagnetic wave, and the solid-line arrows indicate the nitrogen gas.

Fig. 14 schematically shows an electromagnetic wave supply path from the magnetron oscillator (1402) to the polymerizing device (shown in Fig. 13). A member (e.g., the mica plate (1403)) having a small electromagnetic wave transmission loss is attached near the outlet of the magnetron oscillator (1402), thereby physically shielding the magnetron oscillator (1402) and the waveguide (1405), and the nitrogen gas inlet (1404) is attached to the waveguide (1405).

The other end of the waveguide (1405) is connected to the interior of the polymerizing device, and the nitrogen gas flows inside the waveguide (1405) and is supplied into the polymerizing device (shown in Fig. 11) from the opening of the horn antenna (1409). This can prevent the vapor of the content from entering the waveguide (1405), and can supply an electromagnetic wave into the polymerizing device without any loss.

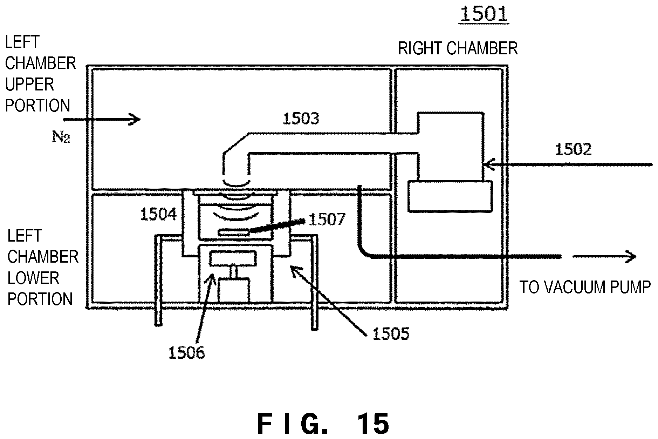

As shown in Figs. 9 and 13, a polymerizing device (shown in Fig. 15) is connected to an exhaust condensation device ("LOW-PRESSURE EXHAUSTION" in Fig. 13) and a vacuum pump (not shown), and depressurized. In addition, the vapor of the content neither enters the waveguide (1405) nor solidifies in it because the nitrogen gas flows as described previously. It is also possible, without using a mechanism like this, to supply an electromagnetic wave through a glass window from the side surface, the bottom surface, or the upper surface of the polymerizing device. However, the vapor of the content or the content itself sometimes solidifies on the glass surface, thereby preventing transmission of an electromagnetic wave and increasing the loss.

Fig. 15 is a schematic view of an example of a polymerization accelerating mechanism (electromagnetic wave emitting device) usable in the polymerized modified polylactic acid manufacturing method of the present invention.

Fig. 15 shows the structure of another example of a polymerization accelerating mechanism (electromagnetic wave emitting device) (1501) of the present invention. This polymerization accelerating mechanism (electromagnetic wave emitting device) (1501) is divided into three chambers, i.e., a right chamber, a left chamber upper portion, and a left chamber lower portion. A magnetron (electromagnetic wave) (1502) oscillated from a magnetron oscillator (not shown, see Fig. 14) is introduced to a polymerization vessel (1504) installed in a central portion of Fig. 15, through a waveguide (1503) in the right chamber. Also, nitrogen gas (N₂) is filled in the left chamber upper portion of the polymerization accelerating mechanism (electromagnetic wave emitting device) (1501).

In the left chamber lower portion, the polymerization vessel (1504) includes a magnet (1507) together with the content. A magnet stirrer (1506) rotates the magnet (1507) in the polymerization vessel (1504) by a magnetic force, thereby mixing and stirring the content. A cooling jacket (1505) is formed on the outer circumference of the polymerization vessel (1504), and manages the temperature of the content of the polymerization vessel (1504).

Temperature management of the content of the polymerization vessel (1504) is performed as follows. That is, to adjust the reaction temperature, a cooler (not shown) cools the polymerization vessel (1504) via the cooling jacket (1505), thereby controlling the temperature to a predetermined temperature. The magnet stirrer (1506) controls stirring by controlling the rotational speed of the magnet (1507). It is also possible to automatically control the temperature and stirring of the polymerization vessel (1504) by using a control system (not shown) such as a computer.

Also, the polymerization accelerating mechanism (electromagnetic wave emitting device) (1501) is a closed system, and can be pressurized or depressurized. In this example shown in Fig. 15, depressurization is performed from the left chamber upper portion by a vacuum pump.

The shape and size of the magnet (1507) are not limited to those of the abovementioned example embodiment, and can be any shape and size that accelerate efficient polymerization of a modified polylactic acid as an object of the present invention, and can achieve a sufficient stirring effect.

The structure of the polymerization accelerating mechanism (electromagnetic wave emitting device) (1501) shown in Fig. 15 has no large difference from a household microwave oven, but includes the waveguide (1503) that locally emits a microwave, the cooling jacket (1505), and the stirring mechanism (1506, 1507).

The waveguide (1503) is made of a square diecast, and the material is preferably an antimony alloy. The loss of microwave can be prevented by plating the inner surfaces with high-quality silver.

The cooling jacket (1505) is a liquid cooling jacket that circulates an antifreeze solution such as ethylene glycol, and is preferably able to control the temperature of the content to a predetermined temperature (e.g., 140°C or less).

The stirring mechanism (1506, 1507) includes the magnet stirrer (1506), and is set in a position that is not directly irradiated with a microwave. The stirring mechanism preferably includes a control circuit (not shown) so as to be able to appropriately control the stirring speed within the range of about 30 to 150 rpm (rotations/min).

In the polymerization accelerating mechanism (electromagnetic wave emitting device) (1501) and in the reaction vessel (1504), oxidation of the content is suppressed by supplying dried nitrogen as shown in Fig. 15. At the same time, this dried nitrogen can be used as a carrier gas for removing water (H₂O) generated by the reaction to the outside of the system.

Since the nitrogen gas discharged from the polymerization accelerating mechanism (electromagnetic wave emitting device) (1501) contains water vapor, a cooling condenser (heat exchanger) (not shown) is preferably inserted between the mechanism and the vacuum pump, thereby collecting the water vapor and discharging the water vapor outside the system.

As the magnetron (not shown) that generates a microwave, a magnetron used in a household microwave oven can directly be used, and it is also possible to additionally include a device suitable for the object of the present invention. This device preferably includes a control circuit capable of continuously varying the output from about 50 to about 500 W (watts).

As the reaction vessel, a vessel made of heat-resistant glass (the highest use temperature is about 400°C) and having an inner volume of, e.g., 2 liters can be used. The circumference of the vessel is preferably shielded by a metal so as to receive microwave emission from only the upper surface.

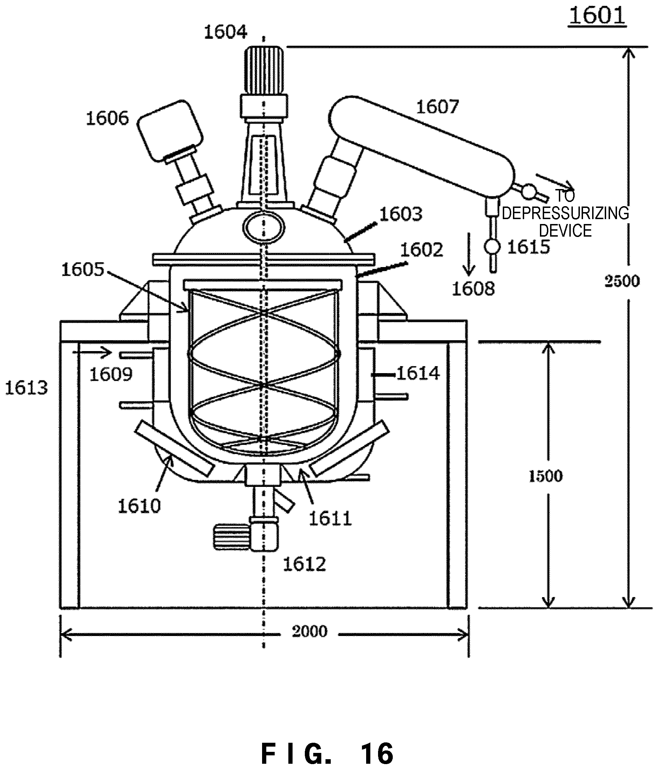

Fig. 16 is a schematic view of an example of an apparatus usable in the polymerized modified polylactic acid manufacturing method of the present invention.

Fig. 16 shows the structure of another example of a polymerization accelerating mechanism (electromagnetic wave emitting device) (1601). The polymerization accelerating mechanism (electromagnetic wave emitting device) (1601) includes a polymerization vessel (1602), a lid (1603), a microwave generator (1606), a stirring device (1604) including a stirring blade (1605), a condensing device (1607) having a heat exchanging function, a steel frame (1613) that supports the polymerization vessel (1602) and the lid (1603), an oil bath (1611) including an electric heater (1610) arranged around the polymerization vessel (1602), a jacket (1614) arranged above the oil bath (1611) and capable of circulating cooling water (1609), and a lift valve (1612) arranged below the polymerization vessel (1602).

The lid (1603) in the upper portion of the polymerization vessel (1602) and the vessel (1602) in the lower portion thereof are detachable. After a content such as an L-lactide derivative is charged, the polymerization vessel (1602) performs a reaction of accelerating polymerization of the L-lactide derivative by using an electromagnetic wave emitted by the microwave generator (1606).

The lid (1603) in the upper portion of the vessel (1602, 1603) includes the stirring device (1604) including the stirring blade (1605). It is also possible to automatically control stirring of the polymerization vessel (1602, 1603) by using a control system (not shown) such as a computer.

The shape and size of the stirring blade (1605) are not limited to those of the abovementioned example embodiment, and can be any shape and size that accelerate efficient generation/acquisition of lactic acid as an object of the present invention, and can achieve a sufficient stirring effect.

The microwave generator (1606) is arranged on the lid (1603) in the upper portion of the polymerization vessel (1602), and emits an electromagnetic wave to the content stored in the vessel (1602) in the lower portion of the vessel (1602, 1603).

The condensing device (1607) is a closed system, and can be pressurized or depressurized. The condensing device (1607) is arranged on the lid (1603) in the upper portion of the polymerization vessel (1602), and can capture a gas or a gas component such as water vapor generated during a polymerization reaction, and discharge the water vapor as a condensate (drain) (1608). The condensing device (1607) may also be connected to a depressurizing device such as a vacuum pump (not shown), and includes a valve (1615) for that purpose.

The vessel (1602) in the lower portion of the polymerization vessel (1602, 1603) has the steel frame (1613) that supports the polymerization vessel. Referring to Fig. 16, as the dimensions of the whole device, the height from the stirring device (1604) to the steel frame (1613) is 2,500 (mm), the height of the steel frame (1613) itself is 1,500 (mm), and the width of the steel frame (1613) is 2,000 (mm). The upper portion of the jacket (1614) that can circulate cooling water around the polymerization vessel (1602, 1603) has a suspension so that the steel frame (1613) can support the polymerization vessel (1602, 1603).

The vessel (1602) in the lower portion of the polymerization vessel (1602, 1603) is equipped with the oil bath (1611) including the electric heater (1610) arranged around it, and the jacket (1614) arranged above the oil bath (1611) and capable of circulating cooling water. The polymerization vessel (1602) is heated by the oil bath (1611) heated by the electric heater (1610), and cooled by the jacket (1614) that can circulate cooling water. This controls the temperature of the content of the polymerization vessel (1602, 1603). It is also possible to automatically control the temperature of the polymerization vessel (1602, 1603) by using a control system (not shown) such as a computer.

The lift valve (1612) is arranged below the polymerization vessel (1602), and can vertically move the polymerization vessel (1602, 1603).

Note that the abovementioned polymerization accelerating mechanism (electromagnetic wave emitting device) can also manufacture a modified polylactic acid by charging polylactic acid and other reagents and performing various operations such as heating and stirring.

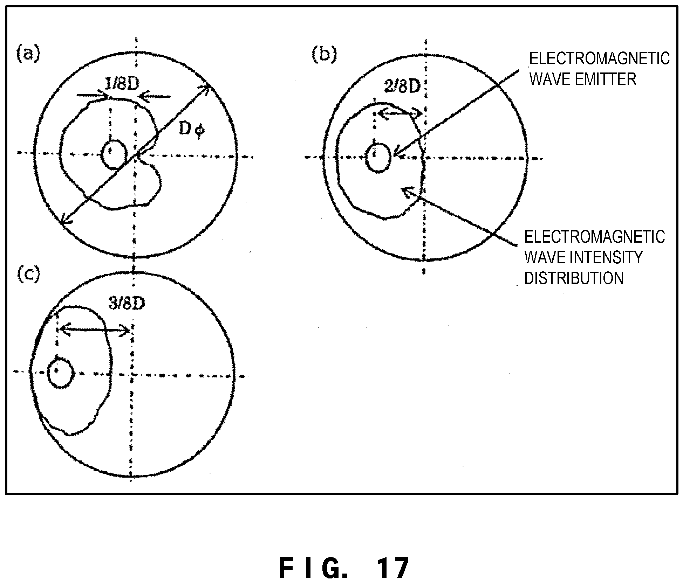

Figs. 17(a) to 17(c) are views showing data obtained by measuring the electromagnetic wave intensity distribution of the electromagnetic wave emitting device by inserting a measurement probe into the polymerizing apparatus.

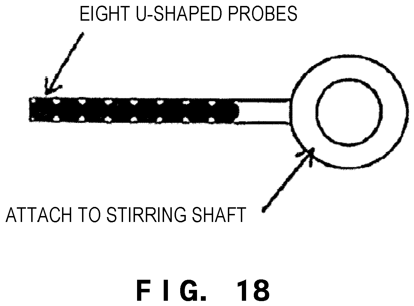

Fig. 18 shows the structure of the measurement probe used when obtaining the data by measuring the electromagnetic wave intensity distribution of the electromagnetic wave emitting device shown in Figs. 17(a)-(c) of the present invention. The measurement is performed by inserting the measurement probe into the polymerizing apparatus.

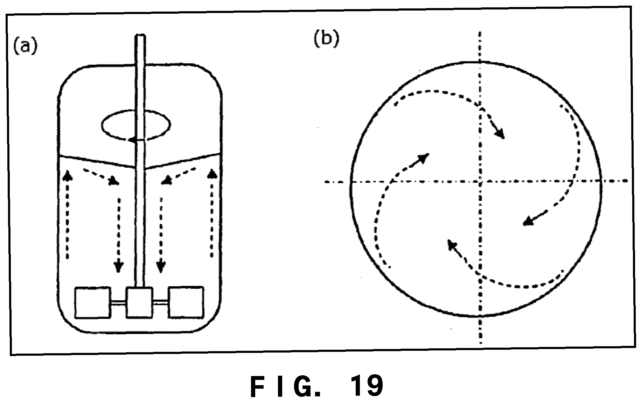

Figs. 19(a) and 19(b) are schematic views showing the way the content moves in the polymerizing apparatus of the present invention. Fig. 19(a) shows the vertical movement of the content, and Fig. 19(b) shows the horizontal movement of the content.

Figs. 17 to 19, particularly the arrows indicating the currents of the content in Fig. 18 demonstrate that a downward current flows from the central portion and an upward current flows in the outer edge portion. The whole content moves as a clockwise eddy current in the polymerizing apparatus. Since the peripheral speed in the outer edge portion is higher than that in the central portion, the content can evenly receive electromagnetic wave emission if the electromagnetic wave distribution is as shown in Fig. 17(c).

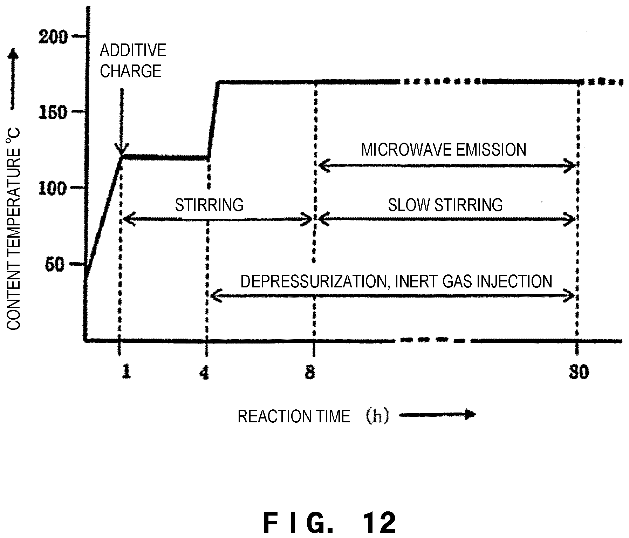

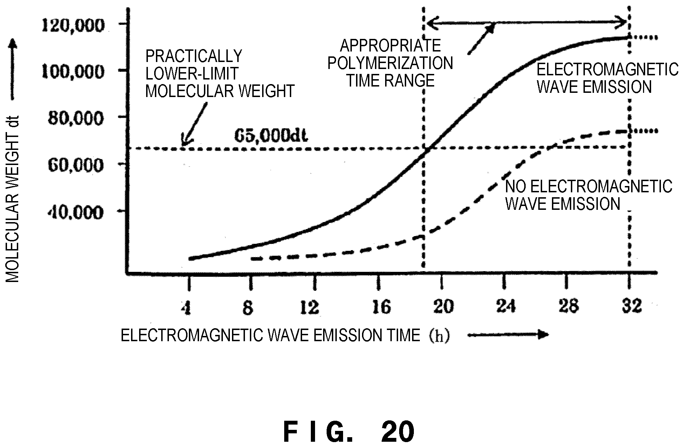

Fig. 20 shows the results of measurement of the molecular weight performed by charging 80 Kg of lactide (a modified polylactic acid) into a polymerizing apparatus having a polymerization volume of 120 L (liters), emitting an electromagnetic wave based on the control diagram of Fig. 12 by using a magnetron oscillator having a rated output of 3 KW, and extracting a sample every 4 hours.

In Fig. 20, the abscissa (X-axis) indicates the electromagnetic wave emission time (the unit is hours (h)), and the ordinate (Y-axis) indicates the measured molecular weight (the unit is daltons (dt)). Also, the solid line indicates the transition of the molecular weight when an electromagnetic wave was emitted, and the broken line indicates that when no electromagnetic wave was emitted.

As shown in Fig. 20, when PLA (polylactic acid) polymerization was performed under the same conditions by using the polymerizing apparatus of the present invention, the reaction time required to reach 65,000 dt (Da: daltons) as the lower limit of a practical molecular weight was reduced to 18 to 20 hours when an electromagnetic wave was emitted. Also, a reachable molecular weight when the reaction time was 32 hours was 70,000 to 75,000 dt (Da) when no electromagnetic wave was emitted, and 100,000 to 110,000 dt (Da) when an electromagnetic wave was emitted.

From the foregoing, when a polylactic acid including a lactide structure according to the present invention is polymerized by emitting an electromagnetic wave, the time required for polymerization can be shortened, and the reachable range of the molecular weight of a polymer extends. This shows high usefulness.

Table 1 shows measurement values obtained by checking the relationship between the electromagnetic wave output and the reachable molecular weight.

The electromagnetic wave output (W/Kg) necessary for 1 Kg of lactide changes in accordance with the frequency of the electromagnetic wave and an emission method. However, the frequency of an industrially usable electromagnetic wave is defined to 2.45 GHz by law at the time of application of the present invention, and electromagnetic cooking devices (electromagnetic ovens) and the like exclusively use this frequency band. The present inventor conducted a test by preparing a 2.45-GHz electromagnetic wave by using a magnetron oscillator (output = 10 KW), adjusting the electromagnetic wave emission output by using a variable reactance output adjuster, and introducing the electromagnetic wave to the electromagnetic wave emitting device shown in Fig. 12.

**[Table 1]**

| Output(W/Kg) | | No emission | 10 | 30 | 50 | 100 |
|---|---|---|---|---|---|---|
| Reaction time h | 4 | - | 1,200 | 3,800 | 4,500 | 4,500 |
| | 8 | - | 1,800 | 25,000 | 6,000 | 6,400 |
| | 16 | 10,000 | 16,000 | 45,000 | 48,000 | 50,000 |
| | 20 | 30,000 | 45,000 | 70,000 | 73,000 | 78,000 |
| | 24 | 50,000 | 62,000 | 86,000 | 90,000 | 95,000 |
| | 28 | 62,000 | 70,000 | 105,000 | 110,000 | 113,000 |
| | 32 | 68,000 | 76,000 | 115,000 | 118,000 | 122,000 |
| | 36 | 70,000 | 81,000 | 123,000 | 125,000 | 127,000 |
| | 40 | 72,000 | 85,000 | 128,000 | 132,000 | 136,000 |

A molecular weight practically usable as PLA (polylactic acid) is 10,000 dt (Da) or more, preferably 15,000 dt (Da) or more, and particularly preferably 65,000 dt (Da) or more, as a weight average molecular weight, and is equivalent to the dotted lower line in Table 1. Of these molecular weights, the smallest electromagnetic wave emission amount for the shortest reaction time was 30 (W/Kg).

Note that the content polymerized by the polymerizing apparatus contains an unreacted substance in addition to polymerized PLA (polylactic acid), and this unreacted substance is transpired by raising the internal temperature of the vessel to 180°C to 190°C.

### ADVANTAGEOUS EFFECTS OF INVENTION

According to the present invention, a modified polylactic acid having a desired molecular weight and a polymerized modified polylactic acid can be provided. It is also possible to provide a modified polylactic acid manufacturing method capable efficiently obtaining the modified polylactic acid and the polymerized modified polylactic acid within a short time, and a modified polylactic acid manufacturing apparatus capable of efficiently obtaining a modified polylactic acid having a sufficient molecular weight within a short time.

In addition, the use of the modified polylactic acid manufacturing method and the modified polylactic acid manufacturing apparatus makes it possible to continuously perform a process from generation of lactic acid to polymerization of a modified polylactic acid via polylactic acid. It is also possible to downsize the facilities, reduce the price, simplify the operations, and reduce the manufacturing cost.

### BRIEF DESCRIPTION OF DRAWINGS

Fig. 1 is a reaction scheme for generating polylactic acid by polymerizing lactic acid;
Fig. 2 is a schematic view conceptually showing the arrangement of a conventional polylactic acid manufacturing apparatus;
Fig. 3A is a reaction scheme showing a modified polylactic acid manufacturing method of the present invention;
Fig. 3B is a schematic view showing the structure of a modified polylactic acid of the present invention;
Fig. 4 is a schematic view of an apparatus usable in the modified polylactic acid manufacturing method of the present invention;
Fig. 5 is a reaction scheme showing a polymerized modified polylactic acid manufacturing method of the present invention;
Fig. 6 is a manufacturing sequence of a polymerized modified polylactic acid of the present invention;
Fig. 7 is a sequence showing manufacturing processes of obtaining the polymerized modified polylactic acid of the present invention;
Fig. 8 is a schematic view of an apparatus usable in the polymerized modified polylactic acid manufacturing method of the present invention;
Fig. 9 is a schematic view showing an example of the structure of a polymerizing apparatus according to the present invention;
Fig. 10 is an example of a control diagram of refining processes of the polymerized modified polylactic acid of the present invention;
Fig. 11 is a view showing the yield of refined lactic acid according to the present invention;
Fig. 12 is an example of a control diagram of lactide generation, ring-opening polymerization, and acquisition of a polymerized modified polylactic acid according to the present invention;
Fig. 13 is a schematic view showing the positional relationship of attachment of a polymerization accelerating mechanism (electromagnetic wave emitting device) according to the apparatus of the present invention;
Fig. 14 is a schematic view showing an example of the structure of the polymerization accelerating mechanism (electromagnetic wave emitting device) according to the present invention;
Fig. 15 is a schematic view of an example of an apparatus usable in the polymerized modified polylactic acid manufacturing method of the present invention;
Fig. 16 is a schematic view of an example of an apparatus usable in the polymerized modified polylactic acid manufacturing method of the present invention;
Figs. 17(a) to 17(c) are views showing data obtained by measuring the electromagnetic wave intensity distribution of the electromagnetic wave emitting device of the present invention by inserting a measurement probe into the polymerizing apparatus;
Fig. 18 shows the structure of the measurement probe used to obtain the data shown in Fig. 17 by measuring the electromagnetic wave intensity distribution of the electromagnetic wave emitting device of the present invention;
Figs. 19(a), 19(b) are schematic views showing the way the content moves in the polymerizing apparatus of the present invention;
Fig. 20 shows the results of measurement of the molecular weight of the content obtained by emitting an electromagnetic wave to a modified polylactic acid including a lactide structure based on the control program of Fig. 12, in the polymerizing apparatus of the present invention;

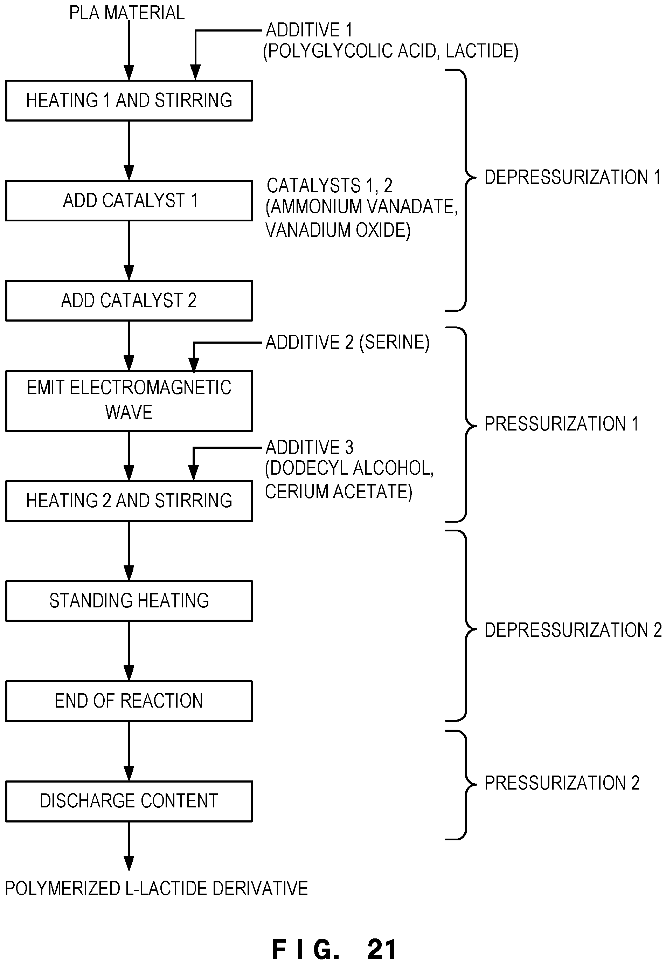

Fig. 21 is a sequence showing manufacturing processes of obtaining a polymerized modified polylactic acid of the present invention;
Fig. 22 is an example of a reaction scheme showing the polymerized modified polylactic acid manufacturing method of the present invention;
Fig. 23 is another example of the reaction scheme showing the polymerized modified polylactic acid manufacturing method of the present invention;
Fig. 24A is an estimated view in which divalent (II) vanadium is introduced to a lactide structural portion of a modified polylactic acid;
Fig. 24B is an estimated view in which trivalent (III) vanadium is introduced to a lactide structural portion of a modified polylactic acid;
Fig. 24C is an estimated view in which tetravalent (IV) vanadium is introduced to a lactide structural portion of a modified polylactic acid;
Fig. 24D is an estimated view in which pentavalent (V) vanadium is introduced to a lactide structural portion of a modified polylactic acid;

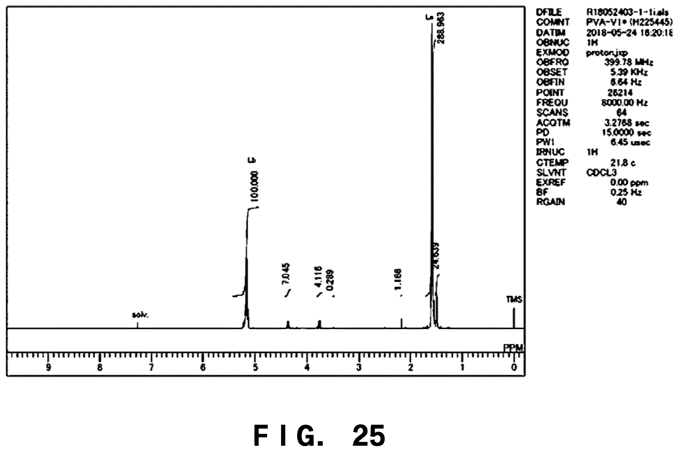

Fig. 25 is a spectral view showing the ¹H-NMR analytical results of a polymerized modified polylactic acid, in which the abscissa indicates a chemical shift (ppm), and the ordinate indicates a peak intensity;

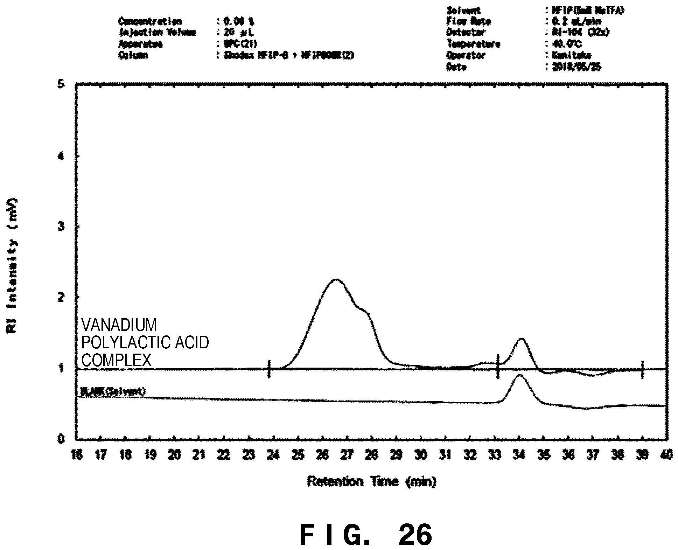

Fig. 26 is a view showing an analytical result (flowchart) obtained by high-performance liquid chromatography of a polymerized modified polylactic acid of the present invention, in which the abscissa indicates the retention time (min), and the ordinate indicates the RI intensity (mV); and

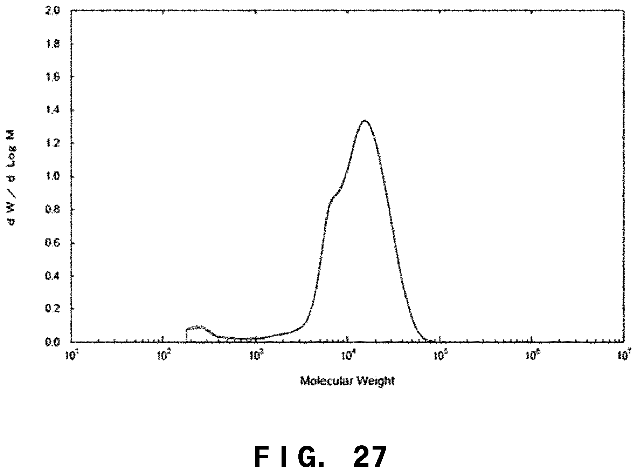

Fig. 27 is a view showing an analytical result obtained by high-performance liquid chromatography of a polymerized modified polylactic acid of the present invention, in which the abscissa indicates a molecular weight (dalton) calculated based on a calibration curve obtained by a standard sample having a known molecular weight, and the ordinate indicates a weight fraction (dw/dLogM) per unit LogM with respect to the molecular weight.

### DESCRIPTION OF EXAMPLE EMBODIMENTS

The present invention will be explained in more detail below by way of its examples. However, the present invention is not limited to these examples.

### <Methods of Measurement and Analysis>

The following devices were used in analysis.

The molecular weight of a modified polylactic acid including a lactide structure was measured by using GPC (Gel Permeation Chromatography) by high-performance liquid chromatography and calibrated by using a standard polymer. Prescription of the GPC measurement was performed based on the explanatory material (an eluent, column temperature: normally room temperature, detector: a refractometer or the like was used for PLA detection) of the apparatus used. Columns to be used were selected as needed in accordance an expected molecular weight of a sample to be measured.

The purity, molecular weight, element composition, and functional group type of a modified polylactic acid including a polymerized lactide structure can be measured by using devices of, e.g., ¹H-NMR, ¹³C-NMR, mass spectrum, GC-MS, LC-MS, infrared absorption (IR), and inductively coupled plasma (ICP), and the properties of a target substance can be grasped by further measuring the melting point and the like.

### (Example 1)

A modified polylactic acid including a polymerized lactide structure was manufactured in accordance with the sequence shown in Fig. 21 by using the polymerizing apparatus shown in Fig. 16. Note that "POLYMERIZED L-LACTIDE DERIVATIVE" described in Fig. 21 indicates a polymerized modified polylactic acid.

A practical prescription was based on the sequence shown in Fig. 21.

As shown in Fig. 21, a polymerized modified polylactic acid was manufactured in accordance with the sequence of polymerized modified polylactic acid manufacturing processes.

First, 100 parts by weight (as a standard amount) of polylactic acid having a weight average molecular weight of about 10,000 daltons (Da) were supplied as a material to the reaction vessel shown in Fig. 6. This material is "PLA MATERIAL" in Fig. 7. Note that the weight average molecular weight of polylactic acid can be about 5,000 to 10,000 Da. It is also possible to hydrolyze polylactic acid by adding methoxy (e.g., methanol or sodium hydroxide) as alkali to the material.

Then, 8 parts by weight of polyglycolic acid were added as ADDITIVE 1 shown in Fig. 21. The addition amount can be about 5 to 10 parts by weight. It is also possible to add about 10 to 20 parts by weight, e.g., 15 parts by weight of a modified polylactic acid including a lactide structure.

Subsequently, while the content of the reaction vessel was heated and stirred, 5 parts by weight of ammonium vanadate were added as CATALYST 1. Furthermore, 5 parts by weight of vanadium oxide were added as CATALYST 2. The addition amount of CATALYST 1 and CATALYST 2 can be about 0.1 to 10 parts by weight.

The internal pressure of the reaction vessel was 0.5 to 0.1 atm from the addition of polyglycolic acid to the addition of vanadium oxide.

After the process of adding vanadium oxide as CATALYST 2, 8 parts by weight of serine as ADDITIVE 2 were added to the reaction vessel. The addition amount can be about 5 to 10 parts by weight.

After serine as ADDITIVE 2 was charged into the reaction vessel as described above, an electromagnetic wave was emitted at a wavelength of 2.45 GHz by using an apparatus capable of emitting a microwave. The internal pressure of the reaction vessel was 1 to 5 atm from the addition of serine to the end of electromagnetic wave emission.

Then, while the content of the reaction vessel was heated and stirred, 0.5 part by weight of dodecyl alcohol was added as ADDITIVE 3. The addition amount can be about 0.1 to 1 part by weight. The internal pressure of the reaction vessel was 1 to 5 atm during the emission of an electromagnetic wave, the addition of dodecyl alcohol, and the termination of heating and stirring.

After that, the reaction vessel was left to stand at a pressure of 0.5 to 0.1 atm.

After the reaction was terminated, the content was discharged by pressurizing the reaction vessel at a pressure of 2 to 3 atm. A polymerized modified polylactic acid was obtained by these processes.

When the molecular weight of the obtained polymerized modified polylactic acid was measured by GPC, the weight average molecular weight was 20,000 Da.

### (Example 2) Evaluation of Modified Polylactic Acid Including Polymerized Lactide Structure

Like Example 1, a modified polylactic acid which included a polymerized lactide structure and to which vanadium was introduced as a metal was manufactured in accordance with the sequence shown in Fig. 21, and the composition, the molecular weight, and the like were measured.

### <Quantification of Vanadium>

As element analysis, vanadium (V) was quantified by using an ICP emission spectrophotometric analyzer SPS 400 manufactured by Seiko Denshi Kogyo. A sample used in analysis was weighed, thermally decomposed by sulfuric acid, nitric acid, and perchloric acid, treated by dilute nitric acid, and used as a constant volume. Consequently, 0.79 mass% (the average value of two-time measurement on the same sample) of vanadium was measured.

### <Quantification of Carbon, Hydrogen, and Nitrogen>

As element analysis, carbon (C), hydrogen (H), and nitrogen (N) were quantified by using a vario MICRO cube (manufactured by Elementar). The analytical conditions were that combustion furnace: 1,150°C, reducing furnace: 850°C, helium flow rate: 200 mL/min, and oxygen flow rate: 25 to 30 mL/min.

A sample used in the analysis was uniformized by being pulverized by using a mortar. As the results of the analysis, 47.6 mass% of carbon, 5.7 mass% of hydrogen, and 0.4 mass% of nitrogen (each was the average value of two-time measurement on the same sample, and the quantification lower limit was 0.3 mass%) were measured.

### <¹H-NMR Analysis>

A sample was measured by using ¹H-NMR. A sample used in the analysis was dissolved by deuterated chloroform, and ¹H-NMR analysis was performed on the soluble matter.

Fig. 25 is a chart showing the results of the analysis using samples. Peaks (chemical shift values: 1.6 and 5.2 ppm) presumably derived from polylactic acid were mainly observed.

### <Analysis of Molecular Weight by GPC>

A sample was measured under the following conditions by using gel permeation chromatography GPC. A sample used in the analysis was gently stirred after a measurement solvent was added, and filtered by using a filter.

The analytical conditions were as follows.
Apparatus: gel permeation chromatograph GPC
Detector: differential diffractometer RI (RI-104 manufactured by SHOWADENKO)
Pump: HPLC liquid delivery unit (LC-20AD manufactured by SHIMADZU)
Autosampler: HPLC autosampler (SIL-10A_{XL} manufactured by SHIMADZU)
Columns: one column of Shodex HFIP-G (φ6.0 mm × 5 cm, manufactured by SHOWA DENKO), two columns of Shodex HFIP-606M (φ6.0 mm × 15 cm, manufactured by SHOWA DENKO)
Solvent: 5-mM sodium trifluoroacetate-added hexafluoroisopropanol
Flow rate: 0.2 mL/min
Column temperature: 40°C
Injection amount: 0.02 mL
Standard sample: monodispersed polymethylmethacrylate (PMMA) manufactured by SHOWA DENKO
Data processing: GPC data processing system

Fig. 26 is a chart showing the results of analysis performed by using samples (measurements were performed twice on the same sample). The upper portion of the chart is a sample chart, and the lower portion is a chart of the solvent as a blank.

Fig. 27 shows a molecular weight calculated based on a calibration curve obtained by a standard sample having a known molecular weight. The average molecular weights of the sample were that a number average molecular weight Mn was 4,760, a weight average molecular weight Mw was 15,800, and a z-average molecular weight Mz was 23,100. Note that the number average molecular weight Mn is an average value related to a low-molecular-weight component, and the z-average molecular weight Mz is an average value related to a high-molecular-weight component.

From the above analytical results, a modified polylactic acid including a polymerized lactide structure had a weight average molecular weight of about 11,000 to 16,000, was mainly made of carbon and hydrogen, contained vanadium, and had a structure derived from polylactic acid. This shows that the present invention is a modified polylactic acid obtained by chemically treating polylactic acid and introducing metal vanadium.

In the above examples, V (vanadium) was used as a metal element. In addition to vanadium, however, it is possible to use an element selected from the group consisting of nickel, iron, aluminum, titanium, cerium, silicon, zirconium, ruthenium, manganese, chromium, cobalt, platinum, thorium, palladium, and tin. Furthermore, when using a modified polylactic acid as an electrode material, it is possible to use combinations of, e.g., vanadium/vanadium, chromium/iron, nickel/tin, and manganese/titanium, as a positive electrode/a negative electrode.

This means that even when using a metal other than vanadium (V), if this metal is introduced as, e.g., sulfate to a lactide structural portion of a modified polylactic acid in accordance with the sequence shown in Fig. 21, it is possible to obtain a modified polylactic acid including a polymerized lactide structure to which the metal is introduced.

In this modified polylactic acid including the polymerized lactide structure, if the introduced metal can take a plurality of valences, the modified polylactic acid can be functioned as a battery by changing the valence by combining two or more valences. This is industrially useful.

Also, a modified polylactic acid including a polymerized lactide structure is an environmentally friendly material because polylactic acid is biodegradable. Accordingly, this modified polylactic acid is useful not only as a battery but also in, e.g., the field of painting.

### REFERENCE SIGNS LIST

401: modified polylactic acid manufacturing apparatus
402: reaction vessel
403: lid
404: stirring device
405: heat exchanger
406: stirring blade
407: stirring shaft
408: heating medium jacket
409: electric heater
410: discharge valve
411: material inlet
801:L-lactide manufacturing apparatus
802: reaction vessel
803: lid
804: stirring device
805: electromagnetic wave generator
806:heat exchanger
807: stirring blade
807a: stirring shaft
808: nitrogen flow waveguide
809: heating medium jacket
810: electric heater
811: discharge valve
901: polymerizing apparatus
902: reaction vessel
903: lid
904: stirring device
905: stirring blade
906: stirring shaft
907: water-cooled condenser
908: condensate reservoir
909: jacket
910: jacket
911: electric heater
912: catalyst/additive inlet
913: material inlet
914:pipe
915: electromagnetic wave emitting device
916: power line
917: discharge port
1301: polymerization accelerating mechanism (electromagnetic wave emitting device)
1302: magnetron oscillator
1303: waveguide
1304: polymerization vessel
1305: content
1306: stirring blade
1307: stirring shaft
1308: low-pressure exhaust port
1309: mica window
1401: polymerization accelerating mechanism (electromagnetic wave emitting device)
1402: magnetron oscillator
1403: mica plate
1404: nitrogen gas inlet
1405: waveguide
1406: electromagnetic wave
1407: nitrogen gas
1408: polymerization vessel upper lid
1409: horn antenna
1501: polymerization accelerating mechanism (electromagnetic wave emitting device)
1502: magnetron (electromagnetic wave)
1503: waveguide
1504: polymerization vessel
1505: cooling jacket
1506: magnet stirrer
1507: magnet
1601: polymerization accelerating mechanism (electromagnetic wave emitting device)
1602: polymerization vessel
1603: lid
1604: stirring device
1605: stirring blade
1606: microwave generator
1607: condensing device
1608: condensate (drain)
1609: water
1610: electric heater
1611: oil bath
1612: lift valve
1613: steel frame
1614: jacket
1615: valve

## Claims

1. A modified polylactic acid represented by general formula (1) below: 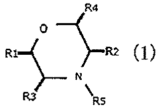 (in formula (1),
R1 and R2 are structures containing a metal element and can be the same or different, 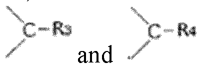 are 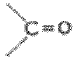 or structures containing a metal element in R3 and R4, and can be the same or different, and
R5 is a structure containing a metal element.)

2. The modified polylactic acid according to claim 1, represented by general formula (2) below: 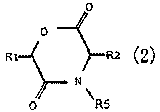 (in formula (2),
R1 and R2 are structures containing a metal element and can be the same or different, and
R5 is a structure containing a metal element.)

3. The modified polylactic acid according to claim 1 or 2, wherein in a modified polylactic acid represented by at least one of formulas (1) and (2), a metal element is an element selected from the group consisting of vanadium, nickel, iron, aluminum, titanium, cerium, silicon, zirconium, ruthenium, manganese, chromium, cobalt, platinum, thorium, palladium, and tin.

4. The modified polylactic acid according to claim 1, manufactured by obtaining polylactic acid including a lactide structure and having a weight average molecular weight of 2,000 to 20,000 daltons by decomposing polylactic acid by an alkali catalyst, aminating the lactide structure by adding an aminated metal compound to polylactic acid including the L-lactide, and adding a functional group to the aminated lactide structural portion by adding a compound having the functional group, thereby complexing the lactide structural portion.

5. A composition in which a modified polylactic acid cited in any one of claims 1 to 4 and polylactic acid coexist.

6. A modified polylactic acid manufacturing method comprising adding polylactic acid including L-lactide and having a weight average molecular weight of 2,000 to 20,000 daltons and a metal compound to a pressure vessel, mixing the materials, and heating the mixture under pressurization in the presence of an inert gas, thereby distilling an L-lactide derivative to which a metal element is introduced.

7. The modified polylactic acid manufacturing method according to claim 6, comprising obtaining polylactic acid including a lactide structure and having a weight average molecular weight of 2,000 to 20,000 daltons by decomposing polylactic acid by an alkali catalyst, aminating the lactide structure by adding an aminated metal compound to polylactic acid including the L-lactide, and adding a functional group to the aminated lactide structural portion by adding a compound having the functional group, thereby complexing the lactide structural portion.

8. The modified polylactic acid manufacturing method according to claim 6 or 7, using methoxy as an alkali catalyst, ammonium vanadate as a nitrogen source, and an apparatus that generates a microwave as a reaction environment.

9. The modified polylactic acid manufacturing method according to claim 7 or 8, comprising adding a functional group to the aminated lactide structure by adding ascorbic acid and/or glutamic acid as a compound having the functional group.

10. The modified polylactic acid manufacturing method according to any one of claims 6 to 9, wherein the metal compound is an oxide of an element selected from the group consisting of vanadium, nickel, iron, aluminum, titanium, cerium, silicon, zircon (zirconium), ruthenium, manganese, chromium, cobalt, platinum, thorium, palladium, and tin.

11. The modified polylactic acid manufacturing method according to any one of claims 6 to 10, comprising adding refined lactic acid and a metal oxide that is 0.5 to 1 wt% of the refined lactic acid to a pressure vessel, injecting nitrogen gas into the pressure vessel by setting an injection pressure at atmospheric pressure to atmospheric pressure +50 mmHg, heating the materials at 170°C to 190°C for 3 to 5 hours, and crystallizing a modified polylactic acid including a lactide structure in the pressure vessel by decreasing the internal temperature of the pressure vessel, thereby obtaining a modified polylactic acid.

12. The modified polylactic acid manufacturing method according to any one of claims 6 to 11, comprising heating a modified polylactic acid to a melting temperature, adding 0.1 to 1 wt% of an organic tin compound and 0.1 to 1 wt% of dodecyl alcohol to the pressure vessel under stirring at 70 to 100 rpm (rotations/min), mixing the materials at about atmospheric pressure for 3 to 5 hours, reducing the pressure to the range of atmospheric pressure -20 to -50 mmHg while injecting an inert gas into the pressure vessel, and stirring a content (including L-lactide) of the pressure vessel under heating and emitting an electromagnetic wave, thereby generating a polymerized modified polylactic acid.

13. A modified polylactic acid manufacturing apparatus comprising:
a lactic acid introducer unit that introduces lactic acid;
a polymerizationer that performs dehydration polycondensation on lactic acid introduced from the lactic acid introduction unit by heating the lactic acid; and
an electrical dehydrationer including at least a pair of electrodes, a partition, and a dehydration portion divided by the partition, the dehydration portion being formed on a cathode side of the electrodes,
wherein the electrical dehydrationer supplies a direct electric current to a lactic polymer having undergone dehydration polycondensation in the polymerizationer, and dehydrates the lactic polymer by moving water in the lactic polymer to the dehydration portion by electro-osmosis.

14. A modified polylactic acid manufacturing apparatus for use in a modified polylactic acid manufacturing method cited in any one of claims 6 to 12, wherein
the apparatus is a sealable apparatus comprising a reaction tank, a stirring device, a temperature controller, and a condensing device,
the reaction tank includes an inlet that charges materials containing polylactic acid including a lactide structure and having a weight average molecular weight of 2,000 to 20,000 daltons, a metal compound, and a compound having a functional group, and an outlet that discharges a reaction product, and the reaction tank causes a reaction of the charged materials by heating and stirring the materials,
the stirring device includes a stirring blade via a stirring shaft in the reaction tank, and mixes the materials charged into the reaction vessel by rotating the stirring shaft at a predetermined speed by the stirring device,
the temperature controller is arranged around the reaction tank, includes a jacket that cools the reaction tank and an electric heater that heats a saccharification reaction tank in a lower portion, and controls a temperature of the reaction tank, and
the condensing device condenses a gas component generated when the materials are heated in the reaction tank.

15. The modified polylactic acid manufacturing apparatus according to claim 14, using methoxy as an alkali catalyst, ammonium vanadate as a nitrogen source, and a device that generates a microwave as a reaction environment.

16. A polymerized modified polylactic acid manufactured by comprising:
performing generation of adding polylactic acid, a nitrogen-containing metal compound, and, if necessary, a metal oxide to a pressure vessel, mixing the materials, and heating the mixture under pressurization in the presence of an inert gas, thereby distilling a modified polylactic acid including a lactide structure; and
performing polymerization of adding a catalyst such as an organic tin compound and an additive such as dodecyl alcohol to the modified polylactic acid including a lactide structure, mixing the materials, and stirring the mixture at a reduced pressure under heating while filling an inert gas, thereby polymerizing the modified polylactic acid including a lactide structure and obtaining a polymer.

17. The polymerized modified polylactic acid according to claim 16, containing, as a metal, one or a plurality of elements selected from the group consisting of vanadium, nickel, iron, aluminum, titanium, cerium, silicon, zircon (zirconium), ruthenium, manganese, chromium, cobalt, platinum, thorium, palladium, and tin.

18. The polymerized modified polylactic acid according to claim 16 or 17, wherein a weight average molecular weight is not less than 65,000 Da (daltons).

19. The polymerized modified polylactic acid according to any one of claims 16 to 18, having formula (11) below as a constituent unit: 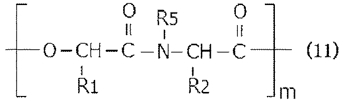 (in formula (11), R1 and R2 are structures containing a metal element and can be the same or different, R5 is a structure containing a metal element, and m indicates the number of continuous or discontinuous repetitions.)

20. The polymerized modified polylactic acid according to any one of claims 16 to 18, having formula (12) below as a constituent unit: 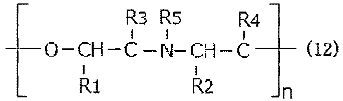 (in formula (12), R1, R2, R3, and R4 are structures containing a metal element and can be the same or different, R5 is a structure containing a metal element, and n indicates the number of continuous or discontinuous repetitions.

21. A polymerized modified polylactic acid manufacturing method comprising:
performing generation of adding polylactic acid, a nitrogen-containing metal compound, and, if necessary, a metal oxide to a pressure vessel, mixing the materials, and heating the mixture under pressurization in the presence of an inert gas, thereby distilling a modified polylactic acid including a lactide structure; and
performing polymerization of adding a catalyst such as an organic tin compound and an additive such as dodecyl alcohol to the modified polylactic acid including a lactide structure, mixing the materials, and stirring the mixture at a reduced pressure under heating while filling an inert gas, thereby polymerizing the modified polylactic acid including a lactide structure and obtaining a polymer.

22. The polymerized modified polylactic acid manufacturing method according to claim 21, further comprising performing impurity transpiration of heating the polymer obtained in the performing polymerization and transpiring an unreacted substance contained in the polymer.

23. The polymerized modified polylactic acid manufacturing method according to claim 21 or 22, comprising obtaining polylactic acid including a lactide structure by decomposing polylactic acid having a weight average molecular weight of 2,000 to 20,000 daltons (Da) as a material by using an alkali catalyst, aminating the lactide structural portion by adding a nitrogen-containing metal compound and a metal compound to polylactic acid including the lactide structure, and adding a functional group to the aminated lactide structural portion by further adding an additive, thereby polymerizing the aminated lactide structural portion.

24. The polymerized modified polylactic acid manufacturing method according to any one of claims 21 to 23, wherein in the performing generation, 0.5 to 1 wt% of an oxide of one type or two or more types of elements (metals) selected from the group consisting of vanadium, nickel, iron, aluminum, titanium, cerium, silicon, zirconium, ruthenium, manganese, chromium, cobalt, platinum, thorium, palladium, and tin is mixed in lactic acid in a pressure vessel filled with an inert gas, and a modified polylactic acid including a lactide structure is distilled by heating the mixture at 170°C to 190°C for 3 to 5 hours, the inert gas is nitrogen gas, an injection pressure is atmospheric pressure +50 mmHg, and lactide is obtained by crystallizing the content by cooling.

25. The polymerized modified polylactic acid manufacturing method according to any one of claims 21 to 24, wherein in the performing polymerization, lactide is heated to a melting temperature, 0.1 to 1 wt% of an organic tin compound and 0.1 to 1 wt% of dodecyl alcohol are added to the lactide under stirring at 70 to 100 rpm (rotations/min), the materials are mixed at atmospheric pressure for 3 to 5 hours, the pressure is reduced to -20 to -50 mmHg while injecting an inert gas, and a polymerized modified polylactic acid is generated by heating and stirring the content at 160°C to 170°C, and an apparatus including a mechanism that accelerates polymerization by emitting an electromagnetic wave is used.

26. The polymerized modified polylactic acid manufacturing method according to any one of claims 21 to 25, wherein 0.5 to 1 wt% of one type or two or more types of metal oxides selected from the group consisting of vanadium, nickel, iron, aluminum, titanium, cerium, silicon, zirconium, ruthenium, manganese, chromium, cobalt, platinum, thorium, palladium, and tin is mixed in lactic acid generated by removing an impurity, the metal compound is sufficiently mixed in the content by stirring the mixture at 70 to 100 rpm (rotations/min) for 1 to 2 hours, the content is heated to 170°C to 190°C and kept stirred for 3 to 5 hours, and the content is slowly cooled and solidified by stopping an operation of the stirring device, thereby distilling and crystallizing a modified polylactic acid including a lactide structure.

27. The polymerized modified polylactic acid manufacturing method according to any one of claims 21 to 26, wherein in performing polymerized modified polylactic acid refining of removing an unreacted substance contained in a polymerized modified polylactic acid obtained by polymerizing a modified polylactic acid including a lactide structure, an internal pressure of a vessel is reduced to -50 to -100 mmHg, and the content is heated to 180°C to 190°C and stirred at 70 to 100 rpm (rotations/min) for 1 to 2 hours, thereby transpiring an unreacted substance contained in the content.

28. The polymerized modified polylactic acid manufacturing method according to any one of claims 21 to 27, using methoxy as an alkali catalyst, ammonium vanadate as a nitrogen source, and an apparatus that generates a microwave as a reaction environment.

29. The polymerized modified polylactic acid manufacturing method according to any one of claims 21 to 28, comprising adding a functional group to the aminated lactide structural portion by adding ascorbic acid and/or glutamic acid as a compound having the functional group, thereby polymerizing the aminated lactide structural portion.

30. The polymerized modified polylactic acid manufacturing method according to any one of claims 21 to 29, wherein the metal compound is an oxide of an element selected from the group consisting of vanadium, nickel, iron, aluminum, titanium, cerium, silicon, zircon (zirconium), ruthenium, manganese, chromium, cobalt, platinum, thorium, palladium, and tin.

31. The polymerized modified polylactic acid manufacturing method according to any one of claims 21 to 30, wherein in the performing generation, refined lactic acid and a metal oxide that is 0.5 to 1 wt% of the refined lactic acid are added to a reaction vessel, nitrogen gas is injected into the pressure vessel by setting an injection pressure at atmospheric pressure to atmospheric pressure +50 mmHg, the materials are heated at 170°C to 190°C for 3 to 5 hours, and an internal temperature of the reaction vessel is decreased, thereby crystallizing a modified polylactic acid including a lactide structure in the pressure vessel and obtaining a modified polylactic acid.

32. The polymerized modified polylactic acid manufacturing method according to any one of claims 21 to 31, wherein a modified polylactic acid including a lactide structure is heated to a melting temperature, 0.1 to 1 wt% of an organic tin compound and 0.1 to 1 wt% of dodecyl alcohol are added to the pressure vessel under stirring at 70 to 100 rpm (rotations/min), the materials are mixed at almost atmospheric pressure for 3 to 5 hours, the pressure is reduced to the range of atmospheric pressure -20 to -50 mmHg while injecting an inert gas into the pressure vessel, and a polymerized modified polylactic acid is generated by heating and stirring the content of the pressure vessel and emitting an electromagnetic wave.

33. The polymerized modified polylactic acid manufacturing method according to any one of claims 21 to 32, wherein in the performing impurity transpiration, the internal pressure of the pressure vessel is reduced to the range of atmospheric pressure -20 to -50 mmHg, and the content of the pressure vessel is heated to 180°C to 190°C and stirred at 70 to 100 rpm for 1 to 2 hours, thereby transpiring an unreacted substance contained in the content.

34. The polymerized modified polylactic acid manufacturing method according to any one of claims 21 to 33, comprising obtaining polylactic acid including a lactide structure by decomposing polylactic acid having a weight average molecular weight of 2,000 to 20,000 daltons (Da) by using an alkali catalyst, aminating the lactide structural portion by adding a nitrogen-containing metal compound to polylactic acid including the lactide structure, and introducing a functional group to the aminated lactide structural portion by adding a compound having the functional group, thereby polymerizing a modified polylactic acid including a lactide structure to which the functional group is introduced.

35. A polymerized modified polylactic acid manufacturing apparatus for use in the polymerized modified polylactic acid manufacturing method according to any one of claims 21 to 34, wherein
the apparatus is a sealable apparatus comprising a reaction tank, a stirring device, a temperature controller, an electromagnetic wave emitting device, and a condensing device,
the reaction tank includes an inlet that charges materials containing polylactic acid including a lactide structure and having a weight average molecular weight of 2,000 to 20,000 daltons, a metal compound, and a compound having a functional group, and an outlet that discharges a reaction product, and causes a reaction of the charged materials by heating and stirring the materials,
the stirring device includes a stirring blade via a stirring shaft in the reaction tank, and mixes the materials charged into the reaction vessel by rotating the stirring shaft at a predetermined speed by the stirring device,
the temperature controller is arranged around the reaction tank, includes a jacket that cools the reaction tank and an electric heater that heats a saccharification reaction tank in a lower portion, and controls a temperature of the reaction tank,
the electromagnetic wave emitting device includes a mechanism that generates an electromagnetic wave, and the electromagnetic wave emitting device accelerates polymerization by emitting an electromagnetic wave to the content stored in the reaction tank, and
the condensing device condenses a gas component generated when the materials are heated in the reaction tank.

36. The modified polylactic acid manufacturing apparatus according to claim 35, using methoxy as an alkali catalyst and ammonium vanadate as a nitrogen source, and generating a microwave as a reaction environment by using the electromagnetic wave emitting device.
